# EUROPEAN PATENT SPECIFICATION

(11) **EP 4 055 979 B1**
(45) Date of publication and mention of the grant of the patent: **21.02.2024**
(21) Application number: 20829060.1
(22) Date of filing: 24.11.2020
(51) Int. Cl.: H04W 74/08

(54) **CYCLIC PREFIX EXTENSIONS FOR UNLICENSED SPECTRUM**
ZYKLISCHE PRÄFIXIERUNGSANSÄTZE FÜR UNLIZENZIERTES SPEKTRUM
EXTENSIONS DE PRÉFIXE CYCLIQUE POUR SPECTRE SANS LICENCE

(30) Priority: 08.11.2019 IN 201941045477
(43) Date of publication of application: 14.09.2022
(73) Proprietor: QUALCOMM INCORPORATED, San Diego, California 92121-1714 (US)
(72) Inventor: BHATTAD, Kapil, San Diego, California 92121-1714 (US); DATTA, Tanumay, San Diego, California 92121-1714 (US); ZHANG, Xiaoxia, San Diego, California 92121-1714 (US); SUN, Jing, San Diego, California 92121-1714 (US)
(74) Representative: Bardehle Pagenberg Partnerschaft mbB Patentanwälte Rechtsanwälte
(86) International application number: PCT/US2020/062047
(87) International publication number: WO 2021/092599

(56) References cited:
- US-A1- 2018 220 464
- US-A1- 2019 124 691
- US-A1- 2019 174 489

## Description

### CROSS REFERENCE

### FIELD OF TECHNOLOGY

The present disclosure relates generally to wireless communications and more specifically to cyclic prefix extensions for unlicensed spectrum.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

Transmissions in wireless communications systems such as LTE and NR systems may use a cyclic prefix (CP) to provide a guard period at the start of a symbol (e.g., OFDMA symbol) which provides protection against multi-path delay spread. The CP may be generated by copying the end of the main body of the symbol to a beginning of the symbol, such that a frequency domain representation of each delay spread component within a fast Fourier transform (FFT) processing window is the same. Both a normal CP (NCP) and a cyclic prefix extension (CPE)/extended cyclic extension (ECP) lengths may be limited in systems. Additional and/or alternative techniques to provide the guard period may be desirable. US 2019/124691 A1 discloses to perform listening for uplink transmission at an appropriate timing, on a carrier with setting of listening. A user terminal according to an aspect of the present invention has a transmission section that transmits a signal on a carrier where a listening is performed prior to uplink transmission, a reception section that receives timing information, and a control section that controls execution timing of the listening, on the basis of the timing information. US 2018/220464 A1 discloses a data transmission method and device configured to address the problems in LTE-U employing the existing channel access mechanism, in which poor channel access capacity is caused, and congestion between UEs in the same cell is likely to occur if multiple UEs cannot access at the same time. The method comprises: sending, by a communication device, a signal during a GP between a downlink subframe and an uplink subframe to occupy a current channel; and transmitting, by the communication device, data via the current channel. The solution provided in embodiments of the present invention has low implementation complexity, and can address the problem of UL having a poorer opportunity to access than WIFI, thus facilitating the implementation of MU-FDM and MU-SDM to prevent significant degradation of LAA performance and a waste of radio resources. US 2019/174489 A1 discloses a wireless device which may receive one or more messages comprising configuration parameters of a licensed assisted access (LAA) cell. The wireless device may receive downlink control information (DCI) for the LAA cell. The DCI may comprise a first field and a second field. The first field may indicate uplink resources for an uplink subframe of the LAA cell. The second field may indicate a first starting position in a plurality of starting positions in the uplink subframe. The first starting position in the uplink subframe may be determined, at least, based on a sum of a listen-before-talk (LBT) period and a timing advance value. The wireless device may generate one or more transport blocks employing the DCI. The wireless device may transmit the one or more transport blocks in the uplink resources starting from the starting position of the uplink subframe.

### SUMMARY

The invention is defined by the appended claims. The described techniques relate to improved methods, systems, devices, and apparatuses that support cyclic prefix extensions for unlicensed spectrum. Generally, the described techniques provide for various ways that a base station and a user equipment (UE) may resume uplink communications when a cyclic prefix extension does not occupy (e.g., "fill") the gap between a downlink communication and an uplink communication.

### BRIEF DESCRIPTION OF THE DRAWINGS

FIG. 1 illustrates an example of a system for wireless communications that supports cyclic prefix extensions for unlicensed spectrum in accordance with aspects of the present disclosure.
FIG. 2 illustrates an example of a wireless communications system that supports cyclic prefix extensions for unlicensed spectrum in accordance with aspects of the present disclosure.
FIG. 3A and FIG. 3B illustrate examples of transmission timelines that support cyclic prefix extensions for unlicensed spectrum in accordance with aspects of the present disclosure.
FIG. 4A and FIG. 4B illustrate examples of transmission timelines that support cyclic prefix extensions for unlicensed spectrum in accordance with aspects of the present disclosure.
FIG. 5 illustrates an example of a transmission timeline that supports cyclic prefix extensions for unlicensed spectrum in accordance with aspects of the present disclosure.
FIG. 6 illustrates an example of a transmission timeline that supports cyclic prefix extensions for unlicensed spectrum in accordance with aspects of the present disclosure.
FIG. 7A and FIG. 7B illustrate examples of transmission timelines that support cyclic prefix extensions for unlicensed spectrum in accordance with aspects of the present disclosure.
FIGs. 8 and 9 show block diagrams of devices that support cyclic prefix extensions for unlicensed spectrum in accordance with aspects of the present disclosure.
FIG. 10 shows a block diagram of a communications manager that supports cyclic prefix extensions for unlicensed spectrum in accordance with aspects of the present disclosure.
FIG. 11 shows a diagram of a system including a device that supports cyclic prefix extensions for unlicensed spectrum in accordance with aspects of the present disclosure.
FIGs. 12 and 13 show block diagrams of devices that support cyclic prefix extensions for unlicensed spectrum in accordance with aspects of the present disclosure.
FIG. 14 shows a block diagram of a communications manager that supports cyclic prefix extensions for unlicensed spectrum in accordance with aspects of the present disclosure.
FIG. 15 shows a diagram of a system including a device that supports cyclic prefix extensions for unlicensed spectrum in accordance with aspects of the present disclosure.
FIGs. 16 through 26 show flowcharts illustrating methods that support cyclic prefix extensions for unlicensed spectrum in accordance with aspects of the present disclosure. The aspects depicted in figures 17-26 do not fall under the scope of protection of the present claims.

### DETAILED DESCRIPTION

In some wireless communications systems, a user equipment (UE) may use a cyclic prefix (CP) to provide a guard period at the start of a symbol (e.g., orthogonal frequency division multiplexing (OFDM) symbol) which provides protection against multi-path delay spread. For example, the CP may be generated by copying the end of the main body of the symbol to a beginning of the symbol, such that a frequency domain representation of each delay spread component within a fast Fourier transform (FFT) processing window is the same.

As described herein, in some cases, a UE may use a cyclic prefix extension (CPE) length for different scenarios (e.g., high delay spread scenarios). For example, the CPE may be used to create a gap of a specific duration (e.g., 16 microseconds (µs), 25µs, etc.) to satisfy regulatory or specification requirements on gaps between base station and UE transmissions and/or to create listen-before-talk (LBT) gaps for the UE (or other UEs) prior to transmissions. The UE may calculate a CPE duration using a subcarrier spacing (SCS) (e.g., where a symbol duration is inversely proportional to the SCS), a timing advance (TA) value for the UE (TA value), an LBT duration, etc. In some cases, a calculated CPE duration may exceed limits imposed by the wireless communication system and/or the UE and the base station may not be able to otherwise populate one or more symbol periods in the gap between downlink resources and uplink resources.

As described herein, the UE and/or base station may perform one or more of various techniques to fill the gap between the downlink resources and uplink resources when a CPE may be limited in an unlicensed spectrum. In some cases, the UE may perform an early LBT procedure, such that a least a portion of the LBT procedure is performed during the downlink resources. In some examples, the UE may perform a late LBT procedure, such that a portion of the uplink resources are punctured part of the LBT procedure. In some cases, the UE may transmit an extra reference signal (e.g., DMRS/SRS) in one or more of the gap symbols before the transmission of the uplink resources. Some techniques provide for the UE transmitting an uplink message at least one symbol early, such that the uplink message is transmitted in one or more symbols of the gap. In some cases, a base station may transmit a cyclic postfix, after the downlink resources, such that the cyclic postfix accounts for at least a portion of one or more symbols of the gap, and the UE may begin the LBT procedure following the cyclic postfix.

In some cases, when a UE is to transmit on scheduled resources, the UE may determine a CPE that is longer than a CPE for resources that are allocated via configured grant. That is, it may be desirable for scheduled (e.g., dynamically scheduled) resources to have priority over resources allocated via configured grant. If such resources are scheduled to start in the same slot, then a UE using the scheduled resources may have priority over another UE using the resources allocated via configured grant (e.g., should have priority because scheduled resources should have priority over resources allocated via configured grant). To give the UE using the scheduled resource priority, the UE may be configured to determine a CPE that is longer than that of the UE using the resources via configured grant. As such, the UE with the longer CPE may perform or begin performing the LBT before the other UE, and thus may prevent the other UE from identifying the open resources. In other cases, a base station may schedule resources such that there are no conflicts or limited conflicts between scheduled resources and granted resources.

Particular aspects of the subject matter described herein may be implemented to realize one or more advantages. The described techniques may support improvements in the unlicensed radio frequency spectrum communication framework, decreasing signaling overhead, and improving reliability, among other advantages. As such, supported techniques may include improved network operations and, in some examples, may promote network efficiencies, among other benefits. Aspects of the disclosure are initially described in the context of wireless communications systems. Aspects of the disclosure are further described with respect to a wireless communications system and various signal transmission timelines. Aspects of the disclosure are further illustrated by and described with reference to apparatus diagrams, system diagrams, and flowcharts that relate to cyclic prefix extensions for unlicensed spectrum.

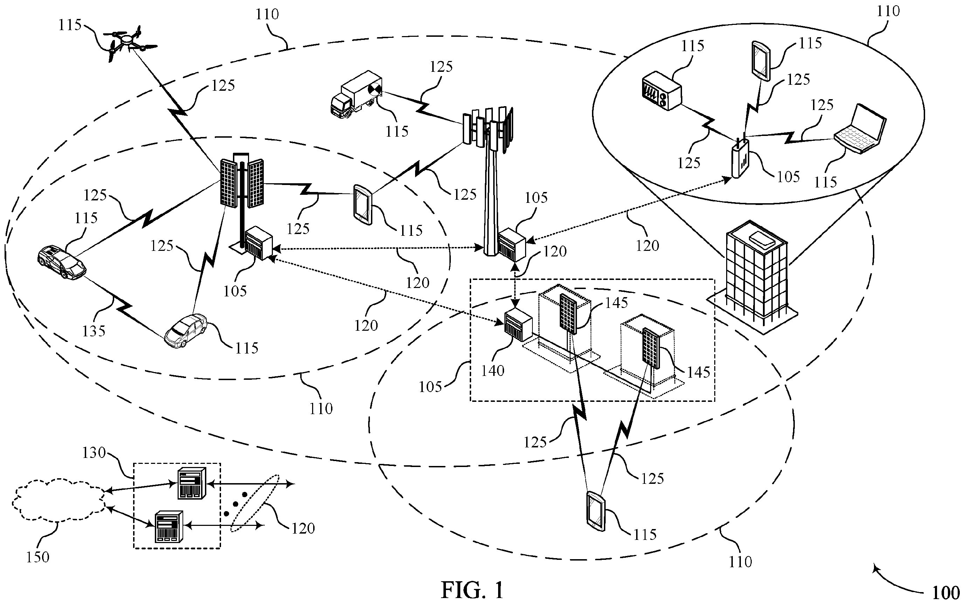

**FIG. 1** illustrates an example of a wireless communications system 100 that supports cyclic prefix extensions for unlicensed spectrum in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ* = 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to the network operators IP services 150. The operators IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples. Devices in wireless communications system 100 may communicate over unlicensed spectrum, which may be a portion of spectrum that includes frequency bands traditionally used by Wi-Fi technology, such as the 5 GHz band, the 2.4 GHz band, the 60 GHz band, the 3.6 GHz band, and/or the 900 MHz band. The unlicensed spectrum may also include other frequency bands.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

The UEs 115 may be configured to use a cyclic prefix (CP) to provide a guard period at the start of a symbol (e.g., orthogonal frequency division multiplexing (OFDM) symbol), which may provide protection against multi-path delay spread. For example, the CP may be generated by copying the end of the main body of the symbol to a beginning of the symbol, such that a frequency domain representation of each delay spread component within a fast Fourier transform (FFT) processing window is the same.

As described herein, in some cases, a UE 115 may use a cyclic prefix extension (CPE) length for different scenarios (e.g., high delay spread scenarios). For example, the CPE may be used to create a gap of a specific duration (e.g., 16 microseconds (µs), 25 µs, etc.) to satisfy regulatory or specification requirements on gaps between base station and UE 115 transmissions and/or to create listen-before-talk (LBT) gaps for the UE 115 (or other UEs 115) prior to transmissions. The UE 115 may calculate a CPE duration using a subcarrier spacing (SCS), a timing advance value for the UE (TA value), an LBT duration, etc. In some cases, a calculated CPE duration may exceed limits imposed by the wireless communication system and/or the UE 115 and the base station 105 may not be able to otherwise populate one or more symbol periods in the gap between downlink resources and uplink resources.

Implementations described herein provide techniques in which the UE 115 and/or base station 105 may use to fill the gap between downlink (DL) and uplink (UL) resources, where the utilization of a CPE may be limited. In some cases, the UE 115 may perform an early LBT procedure, such that a least a portion of the LBT procedure is performed during the downlink resources. In some examples, the UE 115 may perform an LTE procedure such that a portion of the uplink resources are punctured part of the LBT procedure. In some cases, the UE 115 may transmit an extra reference signal (e.g., demodulation reference signal (DMRS)/sounding reference signal (SRS)) in one or more of the gap symbols before the transmission of the uplink resources. Some techniques provide for the UE 115 transmitting an uplink message a symbol early, such that the uplink message is transmitted in one or more symbols of the gap. In some cases, a base station 105 may transmit a cyclic postfix, after the downlink resources, such that the cyclic postfix accounts for at least a portion of one or more symbols of the gap, and the UE 115 may begin the LBT procedure following the cyclic postfix.

In some cases, when a UE 115 is to transmit on scheduled resources, the UE 115 may determine a CPE that is longer than a CPE for resources that are allocated via configured grant. That is, it may be desirable for scheduled resources (e.g., dynamically scheduled via downlink control information) to have priority over resources allocated via configured grant. If such resources are scheduled to start in the same slot, then a UE 115 using the scheduled resources may be configured to have priority over another UE 115 using the resources allocated via configured grant. To give the UE 115 using the scheduled resource priority, the UE 115 may be configured to determine a CPE that is longer than that of the UE 115 using the resources via configured grant. As such, the UE 115 with the longer CPE may begin performing the LBT before the other UE 115, and thus may prevent the other UE 115 from identifying the open resources using LBT. In other cases, a base station 105 may schedule resources such that there are no conflicts or limited conflicts between scheduled resources and granted resources. It should be understood that the techniques described herein may be used in combination or in isolation.

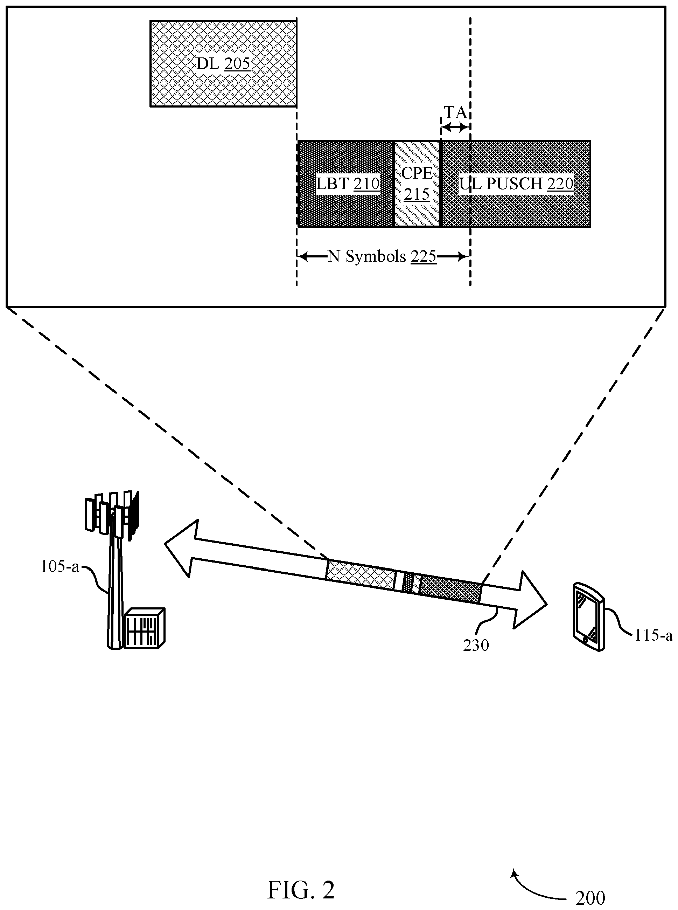

**FIG. 2** illustrates an example of a wireless communications system 200 that supports cyclic prefix extensions for unlicensed spectrum in accordance with aspects of the present disclosure. In some examples, wireless communications system 200 may implement aspects of wireless communication system 100. Wireless communications system 200 may include a base station 105-a and a UE 115-a, which may be examples of corresponding base stations 105 and UEs 115, respectively, as described above with reference to FIG. 1. In some cases, base station 105-a and UE 115-a may communicate on resources of a communication link 230. Additionally, communication link 230 may include resources in an unlicensed band (e.g., NR-U communications).

In some cases, the wireless communications system 200 may impose a gap (e.g., N symbols 225) between downlink resources 205 and uplink resources 220. The gap may be defined as an integer number of symbols, or a fractional number of symbols in some cases (e.g., 1.5 symbols). This gap may be imposed in unlicensed radio frequency spectrum, such as to allow various UEs 115 to utilize the resources. That is, the gap may include one or more symbols that may be used such that UEs 115 may perform an LBT procedure during the gap, and access the resources based on results of the LBT procedure 210. In some cases, the UE 115-a may be configured to transmit a CP and/or a CPE 215 to fill the space between the LBT procedure 210 and the UL resources. As such, there may not be an "empty" space leftover such that another UE 115 may perform LBT and cause interference with the UL resources 220 being used by the UE 115-a.

The duration of the CPE 215 may depend on a timing advance value (TA) of the UE 115-a, a length of the LBT procedure 210, and/or other features such as the length of the N symbols 225 and/or a subcarrier spacing (SCS) of the UL resources 220. In some cases, a length of the CPE 215 may be limited, such as to 1 OFDM symbol. In some cases, the CPE 215 may be transmitted prior to at least a transmission on dynamically scheduled uplink resources 220 (e.g., an uplink message on a PUSCH). The CPE 215 may be located in the symbol(s) immediately preceding the PUSCH allocation indicated by start and length indicator value (SLIV) for application of physical uplink shared channel (PUSCH) or physical uplink control channel (PUCCH). The supported durations for the CPE 215 may be 0 (e.g., no CPE 215), C1*symbol length - 25 µs, C2*symbol length - 16 µs - TA, C3*symbol length - 25 µs - TA, where C1 = 1 for a 15 kHz and 30 kHz and C1=2 for a 60 kHz SCS. 16 µs and 25 µs may correspond to the LBT procedure 210 duration.

A gap remaining after the LBT procedure 210 may be filled with the CPE 215 so that the gap satisfies gap constraints. When the base station 105-a does not know the TA value of the UE 115-a, the base station 105-a may assume the worst case or maximum TA, but the actual TA may be smaller. Accordingly to some values of a TA, the CPE 215 may exceed a 1 OFDM symbol limit. In a 15 kHz subcarrier spacing, the CPE 215 may be 0, 46 µs, 42-X µs, 33-X µs. As long as X is no more than 33 µs, there may be no resulting CPE 215 more than 1 OFDM symbol. In a 30 kHz SCS, the CPE 215 may be 0, 11 µs, 7-X µs, 33-X µs, where X depends on the cell size associated with the UE 115-a. If X is no more than 7 µs, then there may be no ambiguity of the CPE 215 being more than 1 OFDM symbol. For a 60 kHz SCS, the CPE 215 may be 0, 11us, 7-X µs, 16-X µs. Again, if is X is no more than 7 µs, there may be no ambiguity of the CP extension more than 1 OFDM symbol. However, when X>7, the CPE 215 more than 1 OFDM symbol may be warranted (e.g., in the 30 kHz and 60 kHz SCS).

The gap between DL resources 205 and UL resources 220 (e.g., PUSCH resources) may be referred to as NT_S, where N is the number of gap symbols. T_LBT may denote the LBT durations, which may be 16 us or 25 µs depending on the LBT type. TA is the timing advance. For example, 13<TA<20 µs for some configurations. The base station 105-a may assume the largest TA value possible in the number of gap symbols computation. N = ceiling of (T_LBT+TA/T_S). For 15 kHz: T-S = 66.7 µs, N=1. For 30 kHz, T-S = 33.3 µs, For T_LBT=25 µs, TA=13 µs, gNB may compute N=2. For 60 kHz, T_s=16.7 µs, For T_LBT=25 µs, TA= 13 µs, gNB computes N=3. A CPE 215 duration may be T_ECP = NT_s - T_LBT-TA. As such, for 15 kHz, T-ECP<T_s, which may cause no ambiguities. For 30 kHz, if TA<T_s-T_LBT then T_ECP>T_s. Additional for 60 kHz, if TA<2T_s-T_LBT then T_ECP>T_s. Accordingly, the T_ECP may exceed the T_s in some scenarios.

To solve these issues, the implementations described herein provide for various techniques to fill the gap, without exceeding the 1 OFDM symbol CPE 215 duration limitation. These techniques are described with respect to the following figures.

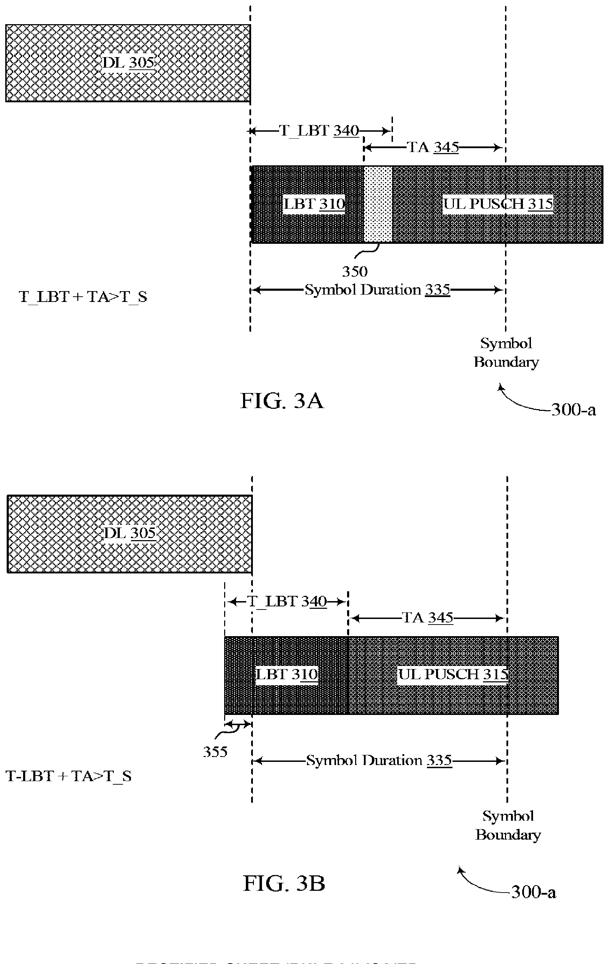

**FIG. 3A and FIG. 3B** illustrate examples of transmission timelines 300 that support cyclic prefix extensions for unlicensed spectrum in accordance with aspects of the present disclosure. In some examples, transmission timelines 300 may implement aspects of wireless communication system 100. The transmission timelines 300 may be used by a UE when transmitting uplink signals to a base station 105.

Specifically, FIG. 3A illustrates a transmission timeline 300-a for puncturing UL PUSCH resources 315. The UE 115 may puncture the UL PUSCH resources 315 when T_LBT + TA > T_S. That is, when the LBT duration 340 plus the TA duration 345 are greater than the symbol duration 335 of the gap between DL resources 305 and UL PUSCH resources 315, then the UE 115 may determine to perform an LBT procedure 310 such that at least a portion of the LBT procedure is performed in a portion 350 of scheduled resources for the uplink channel. (e.g., the UL PUSCH resources315). For a small TA duration 345, the UE may perform a CP extension to fill in a gap in the symbol duration 335. However, for a large TA, the UE 115 may determine to puncture the UL PUSCH resources 315 to provide enough room for the LBT procedure 310 to be performed in a gap between DL resources 305 and UL PUSCH resources 315. For example, in a 30 kHz SCS, a 1 symbol gap (e.g., the symbol duration 335 is 1 symbol) may be configured for a 16 µs LBT. If the TA is larger than 19.7 µs, then an initial portion 350 of the UL PUSCH resources 315 may be punctured. In such cases, the UE 115 may determine to not transmit a CPE.

FIG. 3B illustrates a transmission timeline 300-b for performing an early LBT procedure 310. The UE may perform an early LBT procedure 310 when T_LBT + TA > T_S. That is, when the LBT duration 340 plus the TA duration 345 are greater than the symbol duration 335 of the gap between DL resources 305 and UL PUSCH resources 315, then the UE 115 may determine to perform an LBT procedure such that at least a portion of the LBT procedure is performed a portion 355 of downlink resources 305. For a small TA value, the UE 115 may transmit a CPE. For a large TA, then the LBT procedure 310 may start during the DL resources 305. Since the DL transmission may be weak (e.g., which is reflected by the large TA value), the LBT procedure 310 may not fail.

In some cases, the formula for calculating the duration of the CPE (e.g., T_CPE or T_ECP) = maximum(C2*symbol length - 15 µs - TA, 0) or maximum (C3*symbol length - 25 µs - TA, 0). As such, for a large TA, the UE 115 may determine a CPE duration of 0 (e.g., no CPE). In such cases, the UE 115 may determine to either puncture the UL PUSCH resources 315 or perform an early LBT procedure 310 during the DL resources 305. In some examples, the UE 115 may determine to perform the early LBT procedure 310 during the DL resources 305, wherein the LBT procedure 310 also punctures the UL PUSCH resources 315

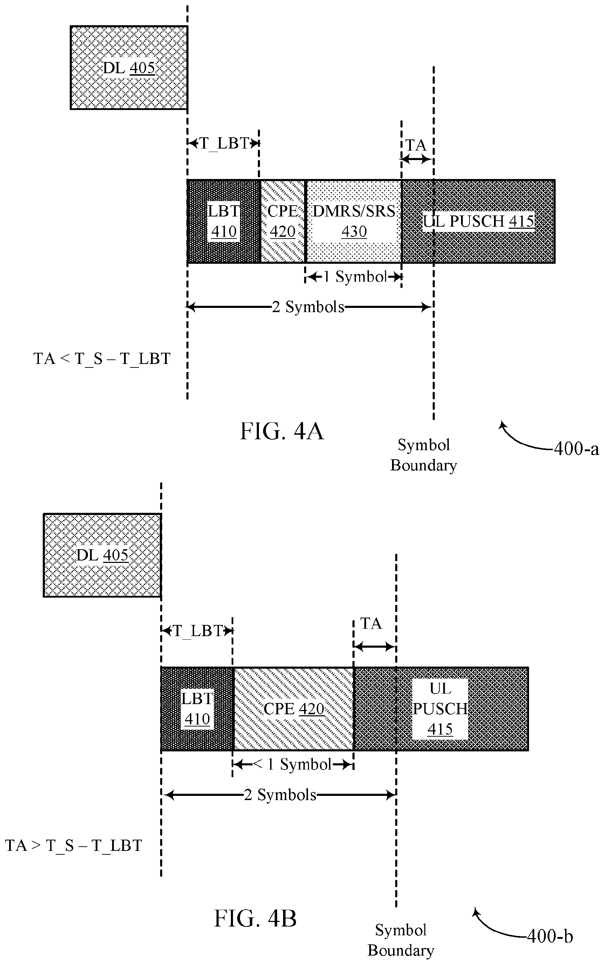

**FIG. 4A and FIG. 4B** illustrate examples of transmission timelines 400 that support cyclic prefix extensions for unlicensed spectrum in accordance with aspects of the present disclosure. In some examples, transmission timelines 400 may implement aspects of wireless communication system 100. The transmission timelines 400 may be used by a UE when transmitting uplink signals to a base station 105.

FIG. 4A illustrates transmission timeline 400-a for sending an additional symbol to fill in a gap remaining after CPE 420 and an LBT procedure 410. That is, if TA < T-S - T_LBT, then the UE 115 may determine to transmit a symbol 430, which may include a DMRS or SRS to fill a 1 symbol gap, and any remaining space may be filled by a CPE 420. A base station 105-a may ask the UE 115 to transmit the symbol 430 including the DMRS/SRS when available to the UE 115 (e.g., when TA < T-S - T_LBT). In some cases, the base station 105 may trigger the SRS and UL PUSCH resources 415 in the grant before the UL PUSCH resources 415 (e.g., in a grant in DL resources 405). Thus, the UE 115 may transmit the SRS symbol 430 + CPE 420 if the UE 115 determines that it needs a CPE 420 of greater than 1 symbol (e.g., which it may not send, then adjust the CPE based on inclusion of the symbol 430). In other cases, the UE may add the additional DMRS at the first symbol of the uplink message (e.g., PUSCH), and the uplink PUSCH and the DMRS may be transmitted one symbol ahead of the scheduled PUSCH resources. In such cases, the DMRS may be repeated in the scheduled UL PUSCH resources 415. Accordingly, a transport block (TB) size for the uplink message may not be modified. The base station 105 may ignore the additional DMRS.

FIG. 4B illustrates transmission timeline 400-b for sending a CPE 420, which is less than 1 symbol. If TA > T-S - T_LBT, then the UE 115 may determine to transmit the CPE 420 after LBT procedure 410 and in the portion of the symbol before the UL PUSCH resources 415. The UE 115 may also determine to transmit an SRS or additional DMRS in a symbol that punctures the UL PUSCH resources 415 when TA > T-S - T_LBT.

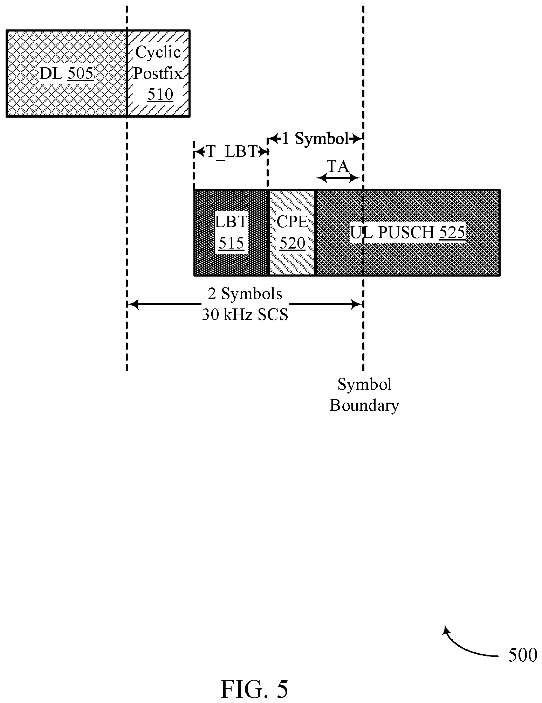

**FIG. 5** illustrates an example of a transmission timeline 500 that supports cyclic prefix extensions for unlicensed spectrum in accordance with aspects of the present disclosure. In some examples, transmission timeline 500 may implement aspects of wireless communication system 100. The transmission timeline 500 may be used by a UE 115 and the base station 105.

In FIG. 5, the UE 115 and the base station 105 may jointly reduce the gap between DL resources 505 and UL PUSCH resources 525 using a cyclic postfix 510 and a CPE 520. Both the cyclic postfix 510 and the CPE 520 may be under a 1 symbol duration. For a 30 kHz SCS, gaps up to two symbols may be filled by using the cyclic postfix 510 and the CPE 520. For example, for a 30 kHz SCS and 25 µs LBT procedure 515 duration (e.g., T_LBT), the base station may schedule a 2 symbol DL/UL gap. In such cases, the base station may determine a cyclic postfix 510 greater than T_s - 25 µs, and the CPE 520 may start after the symbol comprising the cyclic postfix 510 and the LBT procedure 515. That is, the base station 105 (and the UE 115) may determine the cyclic postfix 510 such that the cyclic postfix + T-LBT = 1 symbol (e.g., cyclic postfix = T_S - T_LBT). The remaining symbol of the 2 symbol gap may be filled by the TA and the CPE 520. Thus, irrespective of the TA, the CPE 520 may be less than 1 symbol. If the TA is greater than TA_min, then the base station 105 may transmit the cyclic postfix 510 with a duration greater than T-S-T-LBT-TA_min to ensure that the CPE 520 is less than 1 symbol.

In one example, for a 60 kHz SCS and a 25 µs LBT duration, the base station 105-a may schedule a 3 symbol DL-UL gap. In such cases, if the base station 105-a transmits a cyclic postfix 510 of greater than 2T_s - 25 µs, then the CPE 520 duration may be less than 1 symbol. For a 15 µs LBT duration and 30 kHz SCS, the base station 105 may perform a T_s-15 µs cyclic postfix 510, and for 16 µs LBT duration and 60 kHz SCS, the base station 105 may perform a 2T_S- 16 µs cyclic postfix 510.

In these cases, the UE 115 may transmit an indication of its TA value to the base station 105. The base station 105 may schedule DL-UL resources and gap allocation based on the TA value. The TA value may be periodically transmitted in channel state information (CSI). For example, in a 30 kHz SCS, the symbol duration is T_s and the LBT duration is 25 µs. If the base station 105 receives the TA value in such cases, and TA< T_s - 25 µs, then the base station 105 may schedule the uplink with 1 symbol gap to avoid the CPE 520 being greater than 1 symbol. If the TA>= T_s -25 µs, then the base station 105 may schedule a 2 symbol gap that may be filled with up to a 1 symbol CPE 520.

Further, if the UE 115 transmits an indication of its TA value to the base station 105, the base station 105 may extended the DL message on DL resources 505 with the cyclic postfix 510 such that the UE 115 may not have to transmit the CPE 520 (e.g., the CPE duration is 0). Thus, the base station 105 may fill the gap by extended the DL resources 505 with the cyclic postfix 510. In some cases, the cyclic postfix 510 may be limited to a 1 symbol duration.

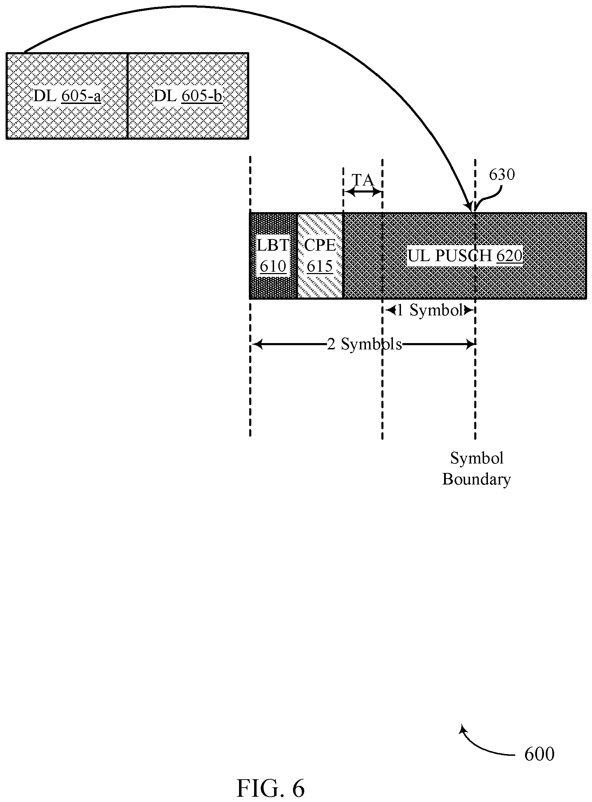

**FIG. 6** illustrates an example of a transmission timeline 600 that supports cyclic prefix extensions for unlicensed spectrum in accordance with aspects of the present disclosure. In some examples, transmission timeline 600 may implement aspects of wireless communication system 100. The transmission timeline 600 may be used by a UE 115 and the base station 105.

In the example illustrated in FIG. 6, the UE 115 may determine to perform the PUSCH (e.g., uplink message) 1 symbol early if there is more than 1 symbol gap between the DL resources 605 and the UL resource 620. That is, a DL message of DL resources 605-a may schedule an UL resource 620 (e.g., PUSCH resource) starting a position 630. But, if the UE 115 determines that more than 1 symbol exists in the gap between the DL resources 605 and the scheduled UL resource 620 after an LBT duration of an LBT procedure 610 is accounted for, then the UE 115 may determine to transmit an uplink message 1 symbol early to avoid the potential 1 symbol CPE 615 limitation. The other resources (other than LBT procedure 610 and the early uplink messages) may be filed by the CPE 615.

If the UE 115 transmits the uplink message 1 symbol early, then SLIV for the uplink message may be changed, resulting in a change of the TB size for the uplink message., and the base station 105 may perform blind detection of the early uplink message. The UE 115 may calculate the new TB size for the uplink message based on the originally allocated UL resources + 1 symbol early resources. In other cases, the TB for the uplink message is not changed, and the starting location of the uplink message is shifted forward by 1 symbol. This may leave a 1 symbol gap following the UL message. In another case, the TB is size for the uplink message is computing using the SLIV corresponding to the originally scheduled UL resources, but the starting position may be advance by 1 symbol and the message may be rate-matched for the new size.

To avoid some scenarios described herein, the TA value may be limited such that there may be no ambiguity in the CPE. That is, the TA value is limited such that the CPE may not be greater than 1 symbol. For 30 kHz SCS, TA may be limited to (0,T_s-T_LBT) or (T_s-T_LBT, 2T_s-T_LBT) µs. For 60 kHz SCS, TA may be limited to (0, 2Ts_-T_LBT) or (2T_s-T_LBT, 3T_s-T_LBT) µs.

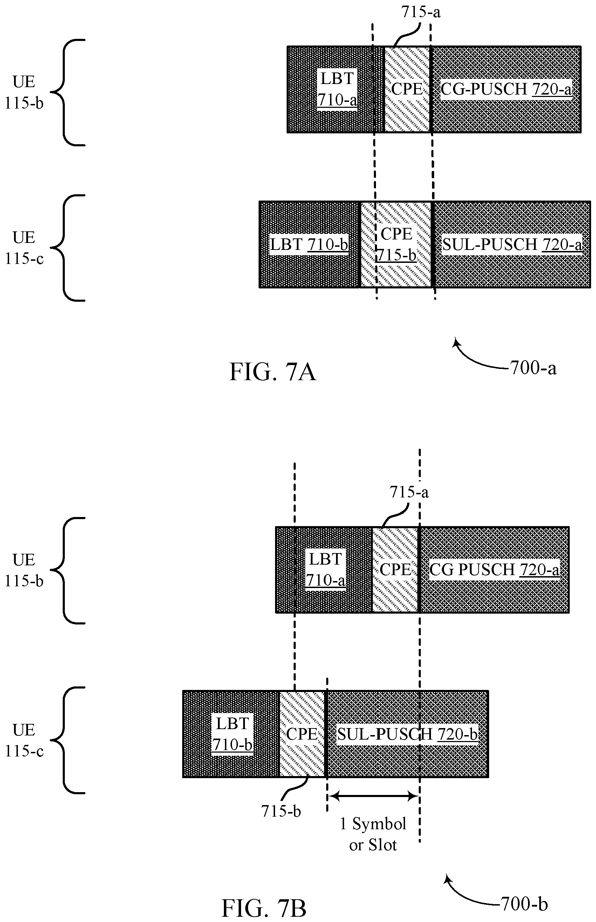

**FIG. 7A and FIG. 7B** illustrate examples of a transmission timelines 700 that support cyclic prefix extensions for unlicensed spectrum in accordance with aspects of the present disclosure. In some examples, transmission timelines 700 may implement aspects of wireless communication system 100. The transmission timelines 700 may be used by a UE 115 and the base station 105 to prioritize scheduled uplink (SUL) transmissions over configured grant uplink (CG-UL) transmissions for various UEs 115, which may be desirable in some scenarios.

In FIG. 7A, UE 115-b is allocated GC-PUSCH resources 720-a (e.g., allocated via configured grant) and determines LBT 710-a duration and CPE 715-a with a first duration. UE 115-c is allocated SUL-PUSCH resources 720-b via SUL. These UL PUSCH resources 720 are scheduled to begin at the same time period. To prioritize the SUL-PUSCH resources 720-b, the UE 115-c may determine to use a duration for the CPE 715-b that is greater than the duration of the CPE 715-a (CG-UL). As such, the UE 115-c may begin the LBT 710-b earlier, and utilize the SUL-PUSCH resources 720-b. The LBT 710-a for UE 115-b may fail due to conflicting with the longer duration CPE 715-b of UE 115-c. Thus, the UE 115-b may determine to not transmit on the CG-PUSCH resource 720-a, thus avoiding interfering transmission. In such cases, the CPE 715-b may be extended beyond a 1 symbol duration. As such, the UE 115-c may utilize techniques as described herein, such as early LBT 710-b (during DL resources), an LBT 710-b that punctures the SUL-PUSCH resources 720-a, an extra DMRS/SRS symbol, a cyclic postfix by the base station 105, or any combination thereof. In these scenarios, the CPE 715-b may apply to other slots of a multi-TTI grant.

In these cases, the CG-UL may have a maximum of 71 to 25 µs CPE 715, such that the SUL (outside COT) may have a higher priority than the CG-UL. For 30 kHz SCS, the base station 105 may schedule SUL 2 symbols earlier than the CG-UL nominal starting position. This can be done by a mini-slot of 2 symbols, for example. Alternatively, for the 15 kHz SCS case, it may possible to have a full symbol CP extension. For 30 kHz case, if the starting symbol of SUL and CG-UL is aligned, then the proposals described herein may be used to fill the gap. If the CPE 715 is limited to 1 symbol, then the CPE 715 for CG-UL may be limited (e.g., 0 or 9 µs offset only). This may leave 25 µs additional duration of CPE 715 for SUL to block CG-UL.

For 60 kHz, CG-UL CPE 715 may be 4 symbols. Accordingly, the base station 105-a may schedule the SUL resources 4 symbols earlier than the CG-UL starting position. In some examples, the base station 105 may use a combination of SLIV control and an indicator to have a 1 symbol or 0 symbol CPE 715. This indication may be jointly coded with a category indication (e.g., category 4 LBT indication) for SUL. When a category 4 LBT is indicated for SUL, then the UE 115 may use a 0 or 1 symbol CPE 715. In some examples, the CPE 715 may be slightly smaller than 1 symbol.

In FIG. 7B, the base station may avoid the conflicts between CG-UL resources (for UE 115-b) and the SUL uplink resources (for UE 115-c) by scheduling the SUL-PUSCH resource 720-b at an earlier time period (e.g., at least 1 symbol or slot ahead of the GC-PUSCH resources 720-a for UE 115-b). As such, the LBT 710-a for UE 115-b may fail due to conflicting with the CPE 715-b or the UL transmission. Thus, the UE 115-b may determine to not transmit an UL message on the CG-PUSCH resources 720-a, thus avoiding an interfering transmission. In some cases, the CG-PUSCH allocation may be from a symbol N to the end of a slot for the first slot it tries LBT on. On subsequent slots, the CG-PUSCH may use a full slot. As such, the scheduled PUSCH (e.g., SUL-PUSCH resources 720-b) may be scheduled earlier than N and prioritized. The CG-PUSCH TDRA may be reinterpreted based on which slot the UE 115-b starts transmission. In such cases, there may be two CG-UCI multiplexing solutions. In a first option, the base station 105 may try two hypotheses. In a second option, the CG-UCI may be sent such that it is common for both start positions of the CG PUSCH in a slot.

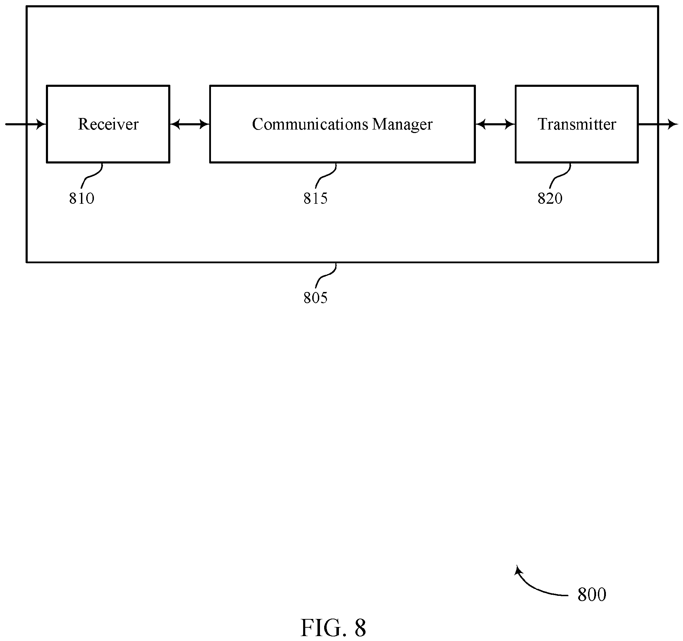

**FIG. 8** shows a block diagram 800 of a device 805 that supports cyclic prefix extensions for unlicensed spectrum in accordance with aspects of the present disclosure. The device 805 may be an example of aspects of a UE 115 as described herein. The device 805 may include a receiver 810, a communications manager 815, and a transmitter 820. The device 805 may also include one or more processors, memory coupled with the one or more processors, and instructions stored in the memory that are executable by the one or more processors to enable the one or more processors to perform the cyclic prefix extension features discussed herein. Each of these components may be in communication with one another (e.g., via one or more buses).

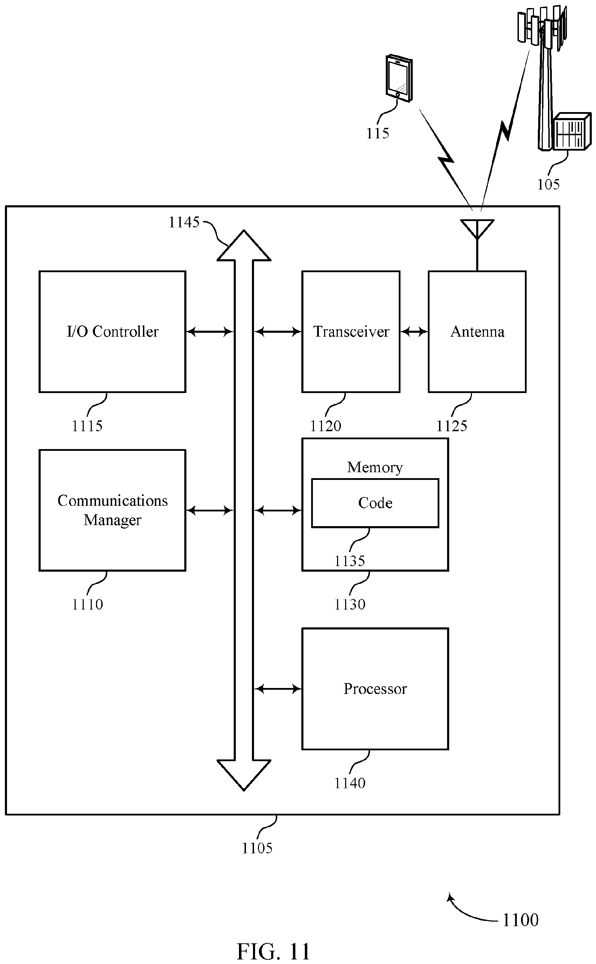

The receiver 810 may receive information such as packets, user data, or control information associated with various information channels (e.g., control channels, data channels, and information related to cyclic prefix extensions for unlicensed spectrum, etc.). Information may be passed on to other components of the device 805. The receiver 810 may be an example of aspects of the transceiver 1120 described with reference to FIG. 11. The receiver 810 may utilize a single antenna or a set of antennas.

The communications manager 815 may determine to transmit an uplink message on resources of an uplink channel in a shared radio frequency spectrum band, identify one or more symbol periods of a gap between resources of a downlink channel and the resources of the uplink channel, a duration of a listen-before-talk procedure associated with transmitting the uplink message, and a timing advance value for the UE, perform the listen-before-talk procedure during at least a portion of the resources of the uplink channel or at least a portion of the resources of the downlink channel based on a combination of the duration of the listen-before-talk procedure and the timing advance value exceeding the one or more symbol periods of the gap, and transmit the uplink message based on a result of the listen-before-talk procedure. The communications manager 815 may also determine to transmit an uplink message on scheduled resources of an uplink channel in a shared radio frequency spectrum band, identify one or more symbol periods of a gap between resources of a downlink channel and the resources of the uplink channel, a duration of a listen-before-talk procedure associated with transmitting the uplink message, and a timing advance value for the UE, compare a combination of the duration of the listen-before-talk procedure and the timing advance value to the one or more symbol periods of the gap, transmit an uplink signal in a symbol preceding the scheduled resources of the uplink channel based on a result of the comparing, and transmit at least a first portion of the uplink message using the scheduled resources of the uplink channel. The communications manager 815 may also transmit, to a base station, a timing advance value for the UE, determine to transmit an uplink message on resources of an uplink channel in a shared radio frequency spectrum band, determine, based on the timing advance value transmitted to the base station, one or more symbol periods of a gap between resources of a downlink channel and the resources of the uplink channel, perform a listen-before-talk procedure in the shared radio frequency spectrum band during at least a portion of the one or more symbol periods of the gap, and transmit the uplink message using the resources of the uplink channel based on a result of the listen-before-talk procedure. The communications manager 815 may also receive downlink control information that schedules resources of an uplink channel of a shared radio frequency spectrum band, the scheduled resources overlapping at least in part with resources of the uplink channel scheduled by a configured grant, determine to transmit an uplink message on the scheduled resources of the uplink channel, determine a first duration of an cyclic prefix extension associated with the scheduled resources of the uplink channel based on receiving the downlink control information, the first duration of the cyclic prefix extension being greater than a second duration of the cyclic prefix extension associated with the resources scheduled by the configured grant, and transmit the cyclic prefix extension for the uplink message according to the determined first duration followed by one or more symbols of the uplink message. The communications manager 815 may also receive from a base station, a signal scheduling resources of an uplink channel, where the signal includes an indication for a number of symbols of a cyclic prefix extension, and transmit, to the base station, an uplink message on the scheduled resources of the uplink channel and in accordance with the indication for the cyclic prefix extension. The communications manager 815 may be an example of aspects of the communications manager 1110 described herein.

The communications manager 815, or its sub-components, may be implemented in hardware, code (e.g., software or firmware) executed by a processor, or any combination thereof. If implemented in code executed by a processor, the functions of the communications manager 815, or its sub-components may be executed by a general-purpose processor, a digital signal processor (DSP), an application-specific integrated circuit (ASIC), a field programmable gate array (FPGA) or other programmable logic device, discrete gate or transistor logic, discrete hardware components, or any combination thereof designed to perform the functions described in the present disclosure.

The communications manager 815, or its sub-components, may be physically located at various positions, including being distributed such that portions of functions are implemented at different physical locations by one or more physical components. In some examples, the communications manager 815, or its sub-components, may be a separate and distinct component in accordance with various aspects of the present disclosure. In some examples, the communications manager 815, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 820 may transmit signals generated by other components of the device 805. In some examples, the transmitter 820 may be collocated with a receiver 810 in a transceiver module. For example, the transmitter 820 may be an example of aspects of the transceiver 1120 described with reference to FIG. 11. The transmitter 820 may utilize a single antenna or a set of antennas.

In some examples, the communications manager 815 may be implemented as an integrated circuit or chipset for a mobile device modem, and the receiver 810 and transmitter 820 may be implemented as analog components (e.g., amplifiers, filters, antennas) coupled with the mobile device modem to enable wireless transmission and reception over one or more bands.

The communications manager 815 as described herein may be implemented to realize one or more potential advantages. One implementation may allow the device 805 to more efficiently utilize resources such that uplink communications on an unlicensed radio frequency spectrum many not be interfered with by other devices. For example, the device 805 may identify a configuration for transmitting signals in the gap between UL and DL resources such that another UE does not interfere with scheduled resources.

Based on implementing the techniques as described herein, a processor of a UE 115 (e.g., controlling the receiver 810, the transmitter 820, or the transceiver 1120 as described with reference to FIG. 11) may increase reliability and decrease signaling overhead in the communication because the signals may not be interfered with, which may cause reprocessing and transmission at the UE 115.

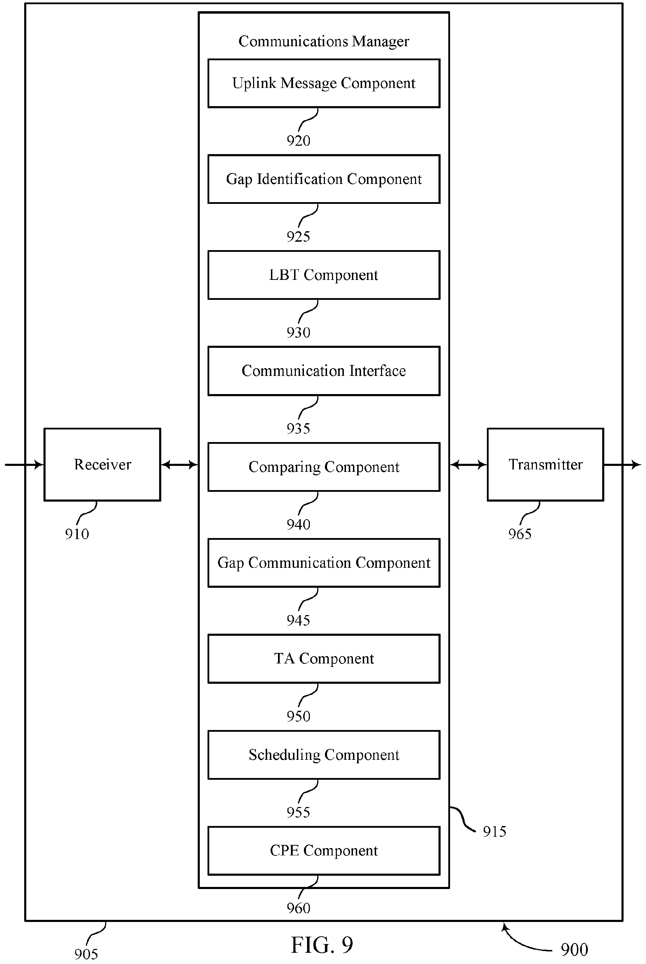

**FIG. 9** shows a block diagram 900 of a device 905 that supports cyclic prefix extensions for unlicensed spectrum in accordance with aspects of the present disclosure. The device 905 may be an example of aspects of a device 805, or a UE 115 as described herein. The device 905 may include a receiver 910, a communications manager 915, and a transmitter 965. The device 905 may also include a processor. Each of these components may be in communication with one another (e.g., via one or more buses).

The receiver 910 may receive information such as packets, user data, or control information associated with various information channels (e.g., control channels, data channels, and information related to cyclic prefix extensions for unlicensed spectrum, etc.). Information may be passed on to other components of the device 905. The receiver 910 may be an example of aspects of the transceiver 1120 described with reference to FIG. 11. The receiver 910 may utilize a single antenna or a set of antennas.

The communications manager 915 may be an example of aspects of the communications manager 815 as described herein. The communications manager 915 may include an uplink message component 920, a gap identification component 925, an LBT component 930, a communication interface 935, a comparing component 940, a gap communication component 945, a TA component 950, a scheduling component 955, and a CPE component 960. The communications manager 915 may be an example of aspects of the communications manager 1110 described herein. In some cases, the uplink message component 920, the gap identification component 925, the LBT component 930, the communication interface 935, the comparing component 940, the gap communication component 945, the TA component 950, the scheduling component 955, and the CPE component 960 may each be or be at least a part of a processor (e.g., a transceiver processor, or a radio processor, or a transmitter processor, or a receiver processor).

The uplink message component 920 may determine to transmit an uplink message on resources of an uplink channel in a shared radio frequency spectrum band.

The gap identification component 925 may identify one or more symbol periods of a gap between resources of a downlink channel and the resources of the uplink channel, a duration of a listen-before-talk procedure associated with transmitting the uplink message, and a timing advance value for the UE.

The LBT component 930 may perform the listen-before-talk procedure during at least a portion of the resources of the uplink channel or at least a portion of the resources of the downlink channel based on a combination of the duration of the listen-before-talk procedure and the timing advance value exceeding the one or more symbol periods of the gap.

The communication interface 935 may transmit the uplink message based on a result of the listen-before-talk procedure.

The uplink message component 920 may determine to transmit an uplink message on scheduled resources of an uplink channel in a shared radio frequency spectrum band.

The gap identification component 925 may identify one or more symbol periods of a gap between resources of a downlink channel and the resources of the uplink channel, a duration of a listen-before-talk procedure associated with transmitting the uplink message, and a timing advance value for the UE.

The comparing component 940 may compare a combination of the duration of the listen-before-talk procedure and the timing advance value to the one or more symbol periods of the gap.

The gap communication component 945 may transmit an uplink signal in a symbol preceding the scheduled resources of the uplink channel based on a result of the comparing.

The communication interface 935 may transmit at least a first portion of the uplink message using the scheduled resources of the uplink channel.

The TA component 950 may transmit, to a base station, a timing advance value for the UE.

The uplink message component 920 may determine to transmit an uplink message on resources of an uplink channel in a shared radio frequency spectrum band.

The gap identification component 925 may determine, based on the timing advance value transmitted to the base station, one or more symbol periods of a gap between resources of a downlink channel and the resources of the uplink channel.

The LBT component 930 may perform a listen-before-talk procedure in the shared radio frequency spectrum band during at least a portion of the one or more symbol periods of the gap.

The communication interface 935 may transmit the uplink message using the resources of the uplink channel based on a result of the listen-before-talk procedure.

The scheduling component 955 may receive downlink control information that schedules resources of an uplink channel of a shared radio frequency spectrum band, the scheduled resources overlapping at least in part with resources of the uplink channel scheduled by a configured grant. In some cases, the scheduling component 955 may receive from a base station, a signal scheduling resources of an uplink channel, where the signal includes an indication for a number of symbols of a cyclic prefix extension.

In some cases, the communication interface 935 may transmit, to the base station, an uplink message on the scheduled resources of the uplink channel and in accordance with the indication for the cyclic prefix extension.

The uplink message component 920 may determine to transmit an uplink message on the scheduled resources of the uplink channel.

The CPE component 960 may determine a first duration of a cyclic prefix extension associated with the scheduled resources of the uplink channel based on receiving the downlink control information, the first duration of the cyclic prefix extension being greater than a second duration of the cyclic prefix extension associated with the resources scheduled by the configured grant.

The gap communication component 945 may transmit the cyclic prefix extension for the uplink message according to the determined first duration followed by one or more symbols of the uplink message.

The transmitter 965 may transmit signals generated by other components of the device 905. In some examples, the transmitter 965 may be collocated with a receiver 910 in a transceiver module. For example, the transmitter 965 may be an example of aspects of the transceiver 1120 described with reference to FIG. 11. The transmitter 965 may utilize a single antenna or a set of antennas.

The processor may be coupled with memory and execute instructions stored in the memory that enable the processor to perform or facilitate the features of the uplink message component 920, the gap identification component 925, the LBT component 930, the communication interface 935, the comparing component 940, the gap communication component 945, the TA component 950, the scheduling component 955, and the CPE component 960 discussed herein. A transceiver processor may be collocated with and/or communicate with (e.g., direct the operations of) a transceiver of the device. A radio processor may be collocated with and/or communicate with (e.g., direct the operations of) a radio (e.g., an NR radio, an LTE radio, a Wi-Fi radio) of the device. A transmitter processor may be collocated with and/or communicate with (e.g., direct the operations of) a transmitter of the device. A receiver processor may be collocated with and/or communicate with (e.g., direct the operations of) a receiver of the device.

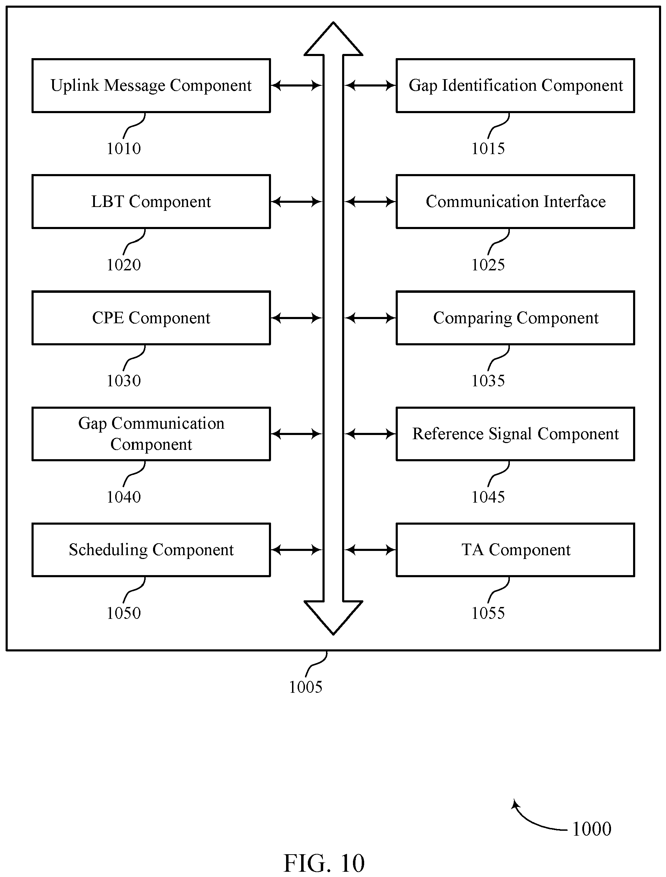

**FIG. 10** shows a block diagram 1000 of a communications manager 1005 that supports cyclic prefix extensions for unlicensed spectrum in accordance with aspects of the present disclosure. The communications manager 1005 may be an example of aspects of a communications manager 815, a communications manager 915, or a communications manager 1110 described herein. The communications manager 1005 may include an uplink message component 1010, a gap identification component 1015, an LBT component 1020, a communication interface 1025, a CPE component 1030, a comparing component 1035, a gap communication component 1040, a reference signal component 1045, a scheduling component 1050, and a TA component 1055. Each of these modules may communicate, directly or indirectly, with one another (e.g., via one or more buses).

The uplink message component 1010 may determine to transmit an uplink message on resources of an uplink channel in a shared radio frequency spectrum band.

In some examples, the uplink message component 1010 may determine to transmit an uplink message on scheduled resources of an uplink channel in a shared radio frequency spectrum band.

In some examples, the uplink message component 1010 may determine to transmit an uplink message on resources of an uplink channel in a shared radio frequency spectrum band.

In some examples, the uplink message component 1010 may determine to transmit an uplink message on the scheduled resources of the uplink channel.

The gap identification component 1015 may identify one or more symbol periods of a gap between resources of a downlink channel and the resources of the uplink channel, a duration of a listen-before-talk procedure associated with transmitting the uplink message, and a timing advance value for the UE.

In some examples, the gap identification component 1015 may identify one or more symbol periods of a gap between resources of a downlink channel and the resources of the uplink channel, a duration of a listen-before-talk procedure associated with transmitting the uplink message, and a timing advance value for the UE.

In some examples, the gap identification component 1015 may determine, based on the timing advance value transmitted to the base station, one or more symbol periods of a gap between resources of a downlink channel and the resources of the uplink channel.

In some examples, the gap identification component 1015 may identify the one or more symbol period of the gap based on the duration of the listen-before talk procedure associated with transmitting the uplink message, the timing advance value for the UE, or both.

In some cases, the subcarrier spacing of the resources of the uplink channel is 30 kHz or 60 kHz.

In some cases, the subcarrier spacing of the resources of the uplink channel is 30 kHz or 60 kHz.

In some cases, the one or more symbol periods of the gap between resources of the downlink channel and the resources of the uplink channel are based on a subcarrier spacing of the resources of the uplink channel.

In some cases, the subcarrier spacing of the resources of the uplink channel is 30 kHz or 60 kHz.

The LBT component 1020 may perform the listen-before-talk procedure during at least a portion of the resources of the uplink channel or at least a portion of the resources of the downlink channel based on a combination of the duration of the listen-before-talk procedure and the timing advance value exceeding the one or more symbol periods of the gap.

In some examples, the LBT component 1020 may perform a listen-before-talk procedure in the shared radio frequency spectrum band during at least a portion of the one or more symbol periods of the gap.

In some examples, the LBT component 1020 may perform a listen-before-talk procedure during at least a portion of the scheduled resources of the uplink channel or at least a portion of resources of a downlink channel based on a combination of the duration of the listen-before-talk procedure and a timing advance value exceeding the one or more symbol periods of a gap between resources of the downlink channel and the scheduled resources of the uplink channel based on determining that the first duration of the cyclic prefix extension exceeds the cyclic prefix extension duration threshold.

In some cases, the listen-before-talk procedure is performed during at least the portion of the resources of the uplink channel or at least the portion of the of the downlink channel when the cyclic prefix extension duration is zero.

In some cases, the listen-before-talk procedure is performed during at least the portion of the resources of the uplink channel or at least the portion of the downlink channel based on a subcarrier spacing of the resources of the uplink channel.

In some cases, the listen-before-talk procedure is performed during at least the portion of the resources of the uplink channel or at least the portion of the downlink channel based on identifying that a duration of a cyclic prefix extension is zero, based on a subcarrier spacing of the resources of the uplink channel, or both.

The communication interface 1025 may transmit the uplink message based on a result of the listen-before-talk procedure.

In some examples, the communication interface 1025 may transmit at least a first portion of the uplink message using the scheduled resources of the uplink channel.

In some examples, the communication interface 1025 may transmit the uplink message using the resources of the uplink channel based on a result of the listen-before-talk procedure.

In some examples, the communication interface 1025 may transmit, to the base station, an uplink message on the scheduled resources of the uplink channel and in accordance with the indication for the cyclic prefix extension.

In some examples, the communication interface 1025 may transmit an uplink signal in a symbol preceding the scheduled resources of the uplink channel on a result of the comparing, where at least a first portion of the uplink message is transmitted using the resources of the uplink channel.

The CPE component 1030 may determine a first duration of a cyclic prefix extension associated with the scheduled resources of the uplink channel based on receiving the downlink control information, the first duration of the cyclic prefix extension being greater than a second duration of the cyclic prefix extension associated with the resources scheduled by the configured grant.

In some examples, the CPE component 1030 may identify that a duration of a cyclic prefix extension is zero based on the duration of the listen-before-talk procedure and the timing advance value for the UE.

In some examples, the CPE component 1030 may transmit a cyclic prefix extension in at least a portion of a second symbol preceding the scheduled resources of the uplink channel, where a duration of the cyclic prefix extension is based on the combination of the duration of the listen-before-talk procedure and the timing advance value.

In some examples, the CPE component 1030 may determine that the combination of the duration of the listen-before-talk procedure and the timing advance value results in a cyclic prefix extension duration exceeding a cyclic prefix extension duration threshold.

In some examples, the CPE component 1030 may transmit a cyclic prefix extension in at least a second portion of the one or more symbol periods of the gap, where a duration of the cyclic prefix extension is based on a combination of a duration of the listen-before-talk procedure and the timing advance value transmitted to the base station.

In some examples, the CPE component 1030 may determine to not transmit a cyclic prefix extension based on the timing advance value transmitted to the base station.

In some examples, the CPE component 1030 may determine that the first duration of the cyclic prefix extension exceeds a cyclic prefix extension duration threshold.

In some cases, the cyclic prefix extension duration threshold is one symbol period.

In some cases, the uplink signal is transmitted in the symbol preceding the scheduled resources of the uplink channel based on the determining that the combination results in the cyclic prefix extension duration exceeding the cyclic prefix extension duration threshold.

In some cases, the first duration of the cyclic prefix extension exceeds the cyclic prefix extension duration threshold based on a subcarrier spacing of the resources of the uplink channel.

The comparing component 1035 may compare a combination of the duration of the listen-before-talk procedure and the timing advance value to the one or more symbol periods of the gap.

The gap communication component 1040 may transmit an uplink signal in a symbol preceding the scheduled resources of the uplink channel based on a result of the comparing.

In some examples, the gap communication component 1040 may transmit the cyclic prefix extension for the uplink message according to the determined first duration followed by one or more symbols of the uplink message.

In some examples, the gap communication component 1040 may transmit at least a second portion of the uplink message in the symbol preceding the scheduled resources of the uplink channel.

In some examples, the gap communication component 1040 may determine a transport block size for transmission of at least the second portion of the uplink message in the symbol preceding the scheduled resources of the uplink channel, where the uplink message is transmitted in accordance with the transport block size.

In some examples, the gap communication component 1040 may shift a starting location for transmitting at least the second portion of the uplink message on the resources of the uplink channel by one symbol, where at least the second portion of the uplink message is transmitted in accordance with the starting location.

In some examples, the gap communication component 1040 may determine a transport block size for transmission of the uplink message in the symbol preceding the scheduled resources of the uplink channel and in the scheduled resources of the uplink channel, where the uplink message is transmitted in accordance with the determined transport block size.

In some examples, the gap communication component 1040 may receive, from the base station, a cyclic postfix in at least a portion of the one or more symbol periods of the gap following the resources of the downlink channel in accordance with the timing advance value transmitted to the base station.

In some examples, the gap communication component 1040 may transmit at least a first portion of the uplink message in a symbol preceding the resources of the uplink channel based on determining that the first duration of the cyclic prefix extension exceeds the cyclic prefix extension duration threshold.

In some cases, the uplink signal is transmitted in the symbol preceding the scheduled resources of the uplink channel based on a subcarrier spacing of the resources of the uplink channel.

In some cases, at least the second portion of the uplink message is transmitted with a transport block size based on transmission of the uplink message on the scheduled resources of the uplink channel.

The scheduling component 1050 may receive downlink control information that schedules resources of an uplink channel of a shared radio frequency spectrum band, the scheduled resources overlapping at least in part with resources of the uplink channel scheduled by a configured grant.

In some examples, the scheduling component 1050 may receive a downlink communication allocating the scheduled resources of the uplink channel and requesting transmission of the reference signal, where the reference signal is transmitted in the symbol preceding the scheduled resources of the uplink channel based on the downlink communication. In some cases, the number of symbols comprises 0 symbols or 1 symbol for the cyclic prefix extension. In some cases, the indication comprises a bit that is jointly coded with a listen-before-talk category indication.

In some examples, the scheduling component 1050 may receive from a base station, a signal scheduling resources of an uplink channel, wherein the signal includes an indication for a number of symbols of a cyclic prefix extension.

The TA component 1055 may transmit, to a base station, a timing advance value for the UE.

In some cases, the indication of the timing advance value is transmitted via a channel state information transmission.

The reference signal component 1045 may transmit a reference signal in the symbol preceding the scheduled resources of the uplink channel.

In some examples, the reference signal component 1045 may transmit a reference signal in a symbol preceding the scheduled resources of the uplink channel based on determining that the first duration of the cyclic prefix extension exceeds the cyclic prefix extension duration threshold.

In some cases, the reference signal includes a demodulation reference signal or a sounding reference signal.

In some cases, a repetition of the reference signal is transmitted in the scheduled resources of the uplink channel.

In some cases, the uplink message component 1010, the gap identification component 1015, the LBT component 1020, the communication interface 1025, the CPE component 1030, the comparing component 1035, the gap communication component 1040, a reference signal component 1045, the scheduling component 1050, and the TA component 1055 may each be or be at least a part of a processor (e.g., a transceiver processor, or a radio processor, or a transmitter processor, or a receiver processor). The processor may be coupled with memory and execute instructions stored in the memory that enable the processor to perform or facilitate the features of the uplink message component 1010, the gap identification component 1015, the LBT component 1020, the communication interface 1025, the CPE component 1030, the comparing component 1035, the gap communication component 1040, a reference signal component 1045, the scheduling component 1050, and the TA component 1055 discussed herein.

**FIG. 11** shows a diagram of a system 1100 including a device 1105 that supports cyclic prefix extensions for unlicensed spectrum in accordance with aspects of the present disclosure. The device 1105 may be an example of or include the components of device 805, device 905, or a UE 115 as described herein. The device 1105 may include components for bi-directional voice and data communications including components for transmitting and receiving communications, including a communications manager 1110, an I/O controller 1115, a transceiver 1120, an antenna 1125, memory 1130, and a processor 1140. These components may be in electronic communication via one or more buses (e.g., bus 1145).

The communications manager 1110 may determine to transmit an uplink message on resources of an uplink channel in a shared radio frequency spectrum band, identify one or more symbol periods of a gap between resources of a downlink channel and the resources of the uplink channel, a duration of a listen-before-talk procedure associated with transmitting the uplink message, and a timing advance value for the UE, perform the listen-before-talk procedure during at least a portion of the resources of the uplink channel or at least a portion of the resources of the downlink channel based on a combination of the duration of the listen-before-talk procedure and the timing advance value exceeding the one or more symbol periods of the gap, and transmit the uplink message based on a result of the listen-before-talk procedure. The communications manager 1110 may also determine to transmit an uplink message on scheduled resources of an uplink channel in a shared radio frequency spectrum band, identify one or more symbol periods of a gap between resources of a downlink channel and the resources of the uplink channel, a duration of a listen-before-talk procedure associated with transmitting the uplink message, and a timing advance value for the UE, compare a combination of the duration of the listen-before-talk procedure and the timing advance value to the one or more symbol periods of the gap, transmit an uplink signal in a symbol preceding the scheduled resources of the uplink channel based on a result of the comparing, and transmit at least a first portion of the uplink message using the scheduled resources of the uplink channel. The communications manager 1110 may also transmit, to a base station, a timing advance value for the UE, determine to transmit an uplink message on resources of an uplink channel in a shared radio frequency spectrum band, determine, based on the timing advance value transmitted to the base station, one or more symbol periods of a gap between resources of a downlink channel and the resources of the uplink channel, perform a listen-before-talk procedure in the shared radio frequency spectrum band during at least a portion of the one or more symbol periods of the gap, and transmit the uplink message using the resources of the uplink channel based on a result of the listen-before-talk procedure. The communications manager 1110 may also receive downlink control information that schedules resources of an uplink channel of a shared radio frequency spectrum band, the scheduled resources overlapping at least in part with resources of the uplink channel scheduled by a configured grant, determine to transmit an uplink message on the scheduled resources of the uplink channel, determine a first duration of an cyclic prefix extension associated with the scheduled resources of the uplink channel based on receiving the downlink control information, the first duration of the cyclic prefix extension being greater than a second duration of the cyclic prefix extension associated with the resources scheduled by the configured grant, and transmit the cyclic prefix extension for the uplink message according to the determined first duration followed by one or more symbols of the uplink message.

The I/O controller 1115 may manage input and output signals for the device 1105. The I/O controller 1115 may also manage peripherals not integrated into the device 1105. In some cases, the I/O controller 1115 may represent a physical connection or port to an external peripheral. In some cases, the I/O controller 1115 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 1115 may represent or interact with a modem, a keyboard, a mouse, a touchscreen, or a similar device. In some cases, the I/O controller 1115 may be implemented as part of a processor. In some cases, a user may interact with the device 1105 via the I/O controller 1115 or via hardware components controlled by the I/O controller 1115.

The transceiver 1120 may communicate bi-directionally, via one or more antennas, wired, or wireless links as described above. For example, the transceiver 1120 may represent a wireless transceiver and may communicate bi-directionally with another wireless transceiver. The transceiver 1120 may also include a modem to modulate the packets and provide the modulated packets to the antennas for transmission, and to demodulate packets received from the antennas.

In some cases, the wireless device may include a single antenna 1125. However, in some cases the device may have more than one antenna 1125, which may be capable of concurrently transmitting or receiving multiple wireless transmissions.

The memory 1130 may include RAM and ROM. The memory 1130 may store computer-readable, computer-executable code 1135 including instructions that, when executed, cause the processor to perform various functions described herein. In some cases, the memory 1130 may contain, among other things, a basic input/output system (BIOS) which may control basic hardware or software operation such as the interaction with peripheral components or devices.

The processor 1140 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1140 may be configured to operate a memory array using a memory controller. In other cases, a memory controller may be integrated into the processor 1140. The processor 1140 may be configured to execute computer-readable instructions stored in a memory (e.g., the memory 1130) to cause the device 1105 to perform various functions (e.g., functions or tasks supporting cyclic prefix extensions for unlicensed spectrum).

The code 1135 may include instructions to implement aspects of the present disclosure, including instructions to support wireless communications. The code 1135 may be stored in a non-transitory computer-readable medium such as system memory or other type of memory. In some cases, the code 1135 may not be directly executable by the processor 1140 but may cause a computer (e.g., when compiled and executed) to perform functions described herein.

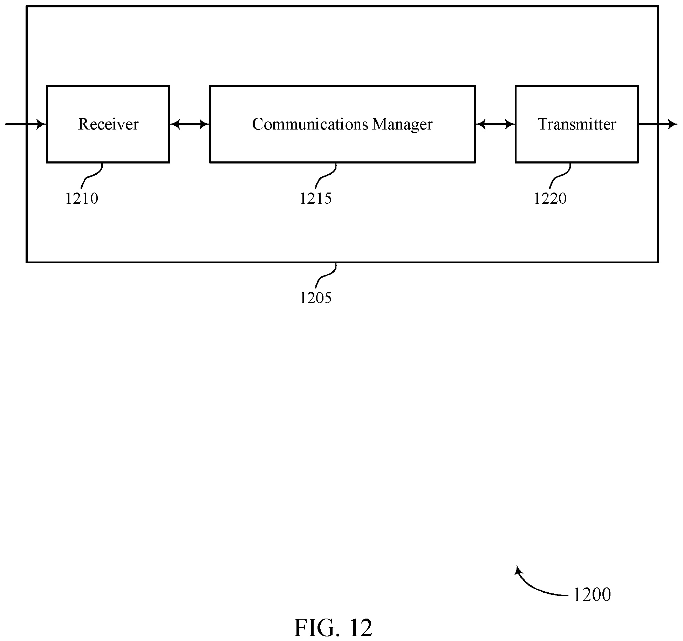

**FIG. 12** shows a block diagram 1200 of a device 1205 that supports cyclic prefix extensions for unlicensed spectrum in accordance with aspects of the present disclosure. The device 1205 may be an example of aspects of a base station 105 as described herein. The device 1205 may include a receiver 1210, a communications manager 1215, and a transmitter 1220. The device 1205 may also include a one or more processors, memory coupled with the one or more processors, and instructions stored in the memory that are executable by the one or more processors to enable the one or more processors to perform the cyclic prefix extension features discussed herein. Each of these components may be in communication with each other (e.g., via one or more buses).

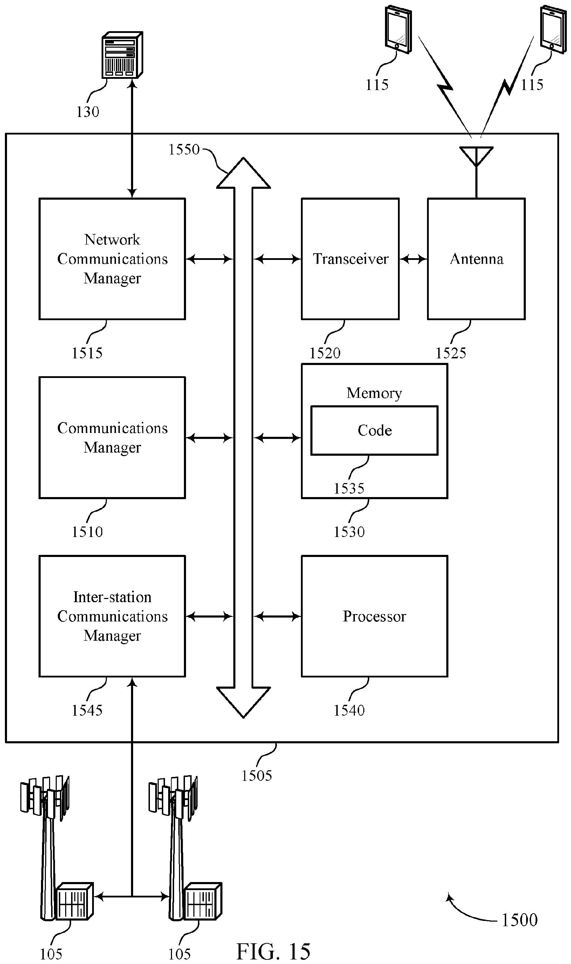

The receiver 1210 may receive information such as packets, user data, or control information associated with various information channels (e.g., control channels, data channels, and information related to cyclic prefix extensions for unlicensed spectrum, etc.). Information may be passed on to other components of the device 1205. The receiver 1210 may be an example of aspects of the transceiver 1520 described with reference to FIG. 15. The receiver 1210 may utilize a single antenna or a set of antennas.

The communications manager 1215 may transmit, to a UE, a request to transmit a reference signal based on one or more symbol periods of a gap between resources of a downlink channel and scheduled resources of an uplink channel, receive, from the UE and in a symbol preceding the scheduled resources of the uplink channel, the reference signal responsive to the request, receive, from the UE, at least a first portion of an uplink message using the scheduled resources of the uplink channel, transmit, to a UE, a signal scheduling resources of an uplink channel, receive, from the UE, at least a first portion of an uplink message on a symbol preceding the scheduled resources of the uplink channel based on one or more symbol periods of a gap between resources of a downlink channel and the scheduled resources of the uplink channel, receive, from a UE, a timing advance value for the UE, determine, based on the timing advance value received from the UE, one or more symbol periods of a gap between resources of a downlink channel and resources of an uplink channel, transmit a cyclic postfix on at least a portion of a symbol period following the resources of the downlink channel based on the determining, receive, from the UE, the uplink message on the resources of the uplink channel, receive, from a UE, a timing advance value for the UE, transmit, to the UE, a signal scheduling resources of an uplink channel, where the resources of the uplink channel are scheduled in accordance with the timing advance value received from the UE, receive, from the UE, the uplink message on the resources of the uplink channel, transmit, to a first UE, a first signal scheduling resources of first uplink channel, transmit, to a second UE, a second signal granting resources of a second uplink channel, where the resources for the first uplink channel are allocated to at least one slot or symbol prior to the resources allocated for the second uplink channel, and receive, from the first UE, an uplink message on the resources for the first uplink channel. The communications manager 1215 may also transmit, to a user equipment (UE), a signal scheduling resources of an uplink channel, where the signal includes an indication for a number of symbols of a cyclic prefix extension, and receive, from the UE, an uplink message on the scheduled resources and in accordance with the indication for the cyclic prefix extension. The communications manager 1215 may be an example of aspects of the communications manager 1510 described herein.

The communications manager 1215, or its sub-components, may be implemented in hardware, code (e.g., software or firmware) executed by a processor, or any combination thereof. If implemented in code executed by a processor, the functions of the communications manager 1215, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 1215, or its sub-components, may be physically located at various positions, including being distributed such that portions of functions are implemented at different physical locations by one or more physical components. In some examples, the communications manager 1215, or its sub-components, may be a separate and distinct component in accordance with various aspects of the present disclosure. In some examples, the communications manager 1215, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 1220 may transmit signals generated by other components of the device 1205. In some examples, the transmitter 1220 may be collocated with a receiver 1210 in a transceiver module. For example, the transmitter 1220 may be an example of aspects of the transceiver 1520 described with reference to FIG. 15. The transmitter 1220 may utilize a single antenna or a set of antennas.

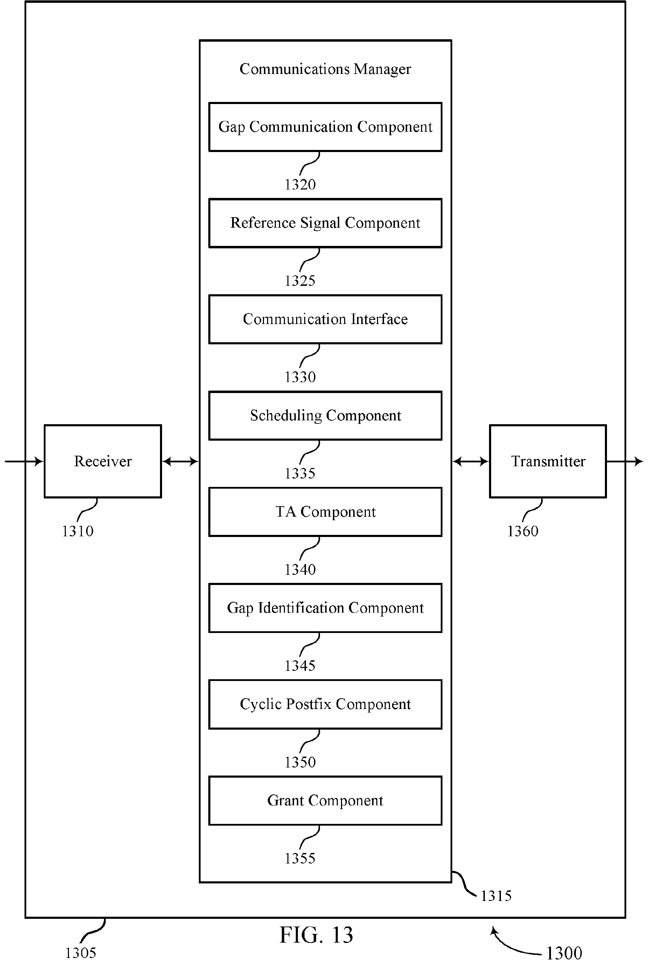

**FIG. 13** shows a block diagram 1300 of a device 1305 that supports cyclic prefix extensions for unlicensed spectrum in accordance with aspects of the present disclosure. The device 1305 may be an example of aspects of a device 1205, or a base station 105 as described herein. The device 1305 may include a receiver 1310, a communications manager 1315, and a transmitter 1360. The device 1305 may also include one or more processors, memory coupled with the one or more processors, and instructions stored in the memory that are executable by the one or more processors to enable the one or more processors to perform the cyclic prefix extension features discussed herein. Each of these components may be in communication with each other (e.g., via one or more buses).

The receiver 1310 may receive information such as packets, user data, or control information associated with various information channels (e.g., control channels, data channels, and information related to cyclic prefix extensions for unlicensed spectrum, etc.). Information may be passed on to other components of the device 1305. The receiver 1310 may be an example of aspects of the transceiver 1520 described with reference to FIG. 15. The receiver 1310 may utilize a single antenna or a set of antennas.

The communications manager 1315 may be an example of aspects of the communications manager 1215 as described herein. The communications manager 1315 may include a gap communication component 1320, a reference signal component 1325, a communication interface 1330, a scheduling component 1335, a TA component 1340, a gap identification component 1345, a cyclic postfix component 1350, and a grant component 1355. The communications manager 1315 may be an example of aspects of the communications manager 1510 described herein.

The gap communication component 1320 may transmit, to a UE, a request to transmit a reference signal based on one or more symbol periods of a gap between resources of a downlink channel and scheduled resources of an uplink channel.

The reference signal component 1325 may receive, from the UE and in a symbol preceding the scheduled resources of the uplink channel, the reference signal responsive to the request.

The communication interface 1330 may receive, from the UE, at least a first portion of an uplink message using the scheduled resources of the uplink channel.

The scheduling component 1335 may transmit, to a UE, a signal scheduling resources of an uplink channel.

The communication interface 1330 may receive, from the UE, at least a first portion of an uplink message on a symbol preceding the scheduled resources of the uplink channel based on one or more symbol periods of a gap between resources of a downlink channel and the scheduled resources of the uplink channel.

The TA component 1340 may receive, from a UE, a timing advance value for the UE.

The gap identification component 1345 may determine, based on the timing advance value received from the UE, one or more symbol periods of a gap between resources of a downlink channel and resources of an uplink channel.

The cyclic postfix component 1350 may transmit a cyclic postfix on at least a portion of a symbol period following the resources of the downlink channel based on the determining.

The communication interface 1330 may receive, from the UE, the uplink message on the resources of the uplink channel.

The TA component 1340 may receive, from a UE, a timing advance value for the UE.

The scheduling component 1335 may transmit, to the UE, a signal scheduling resources of an uplink channel, where the resources of the uplink channel are scheduled in accordance with the timing advance value received from the UE. In some cases, the scheduling component 1335 may transmit, to a user equipment (UE), a signal scheduling resources of an uplink channel, wherein the signal includes an indication for a number of symbols of a cyclic prefix extension.

The communication interface 1330 may receive, from the UE, the uplink message on the resources of the uplink channel. In some cases, the communication interface 1330 may receive, from the UE, an uplink message on the scheduled resources and in accordance with the indication for the cyclic prefix extension.

The scheduling component 1335 may transmit, to a first UE, a first signal scheduling resources of first uplink channel.

The grant component 1355 may transmit, to a second UE, a second signal granting resources of a second uplink channel, where the resources for the first uplink channel are allocated to at least one slot or symbol prior to the resources allocated for the second uplink channel.

The communication interface 1330 may receive, from the first UE, an uplink message on the resources for the first uplink channel.

The transmitter 1360 may transmit signals generated by other components of the device 1305. In some examples, the transmitter 1360 may be collocated with a receiver 1310 in a transceiver module. For example, the transmitter 1360 may be an example of aspects of the transceiver 1520 described with reference to FIG. 15. The transmitter 1360 may utilize a single antenna or a set of antennas.

In some cases, the gap communication component 1320, the reference signal component 1325, the communication interface 1330, the scheduling component 1335, the TA component 1340, the gap identification component 1345, the cyclic postfix component 1350, and the grant component 1355 may each be or be at least a part of a processor (e.g., a transceiver processor, or a radio processor, or a transmitter processor, or a receiver processor). The processor may be coupled with memory and execute instructions stored in the memory that enable the processor to perform or facilitate the features of the gap communication component 1320, the reference signal component 1325, the communication interface 1330, the scheduling component 1335, the TA component 1340, the gap identification component 1345, the cyclic postfix component 1350, and the grant component 1355 discussed herein. A transceiver processor may be collocated with and/or communicate with (e.g., direct the operations of) a transceiver of the device. A radio processor may be collocated with and/or communicate with (e.g., direct the operations of) a radio (e.g., an NR radio, an LTE radio, a Wi-Fi radio) of the device. A transmitter processor may be collocated with and/or communicate with (e.g., direct the operations of) a transmitter of the device. A receiver processor may be collocated with and/or communicate with (e.g., direct the operations of) a receiver of the device.

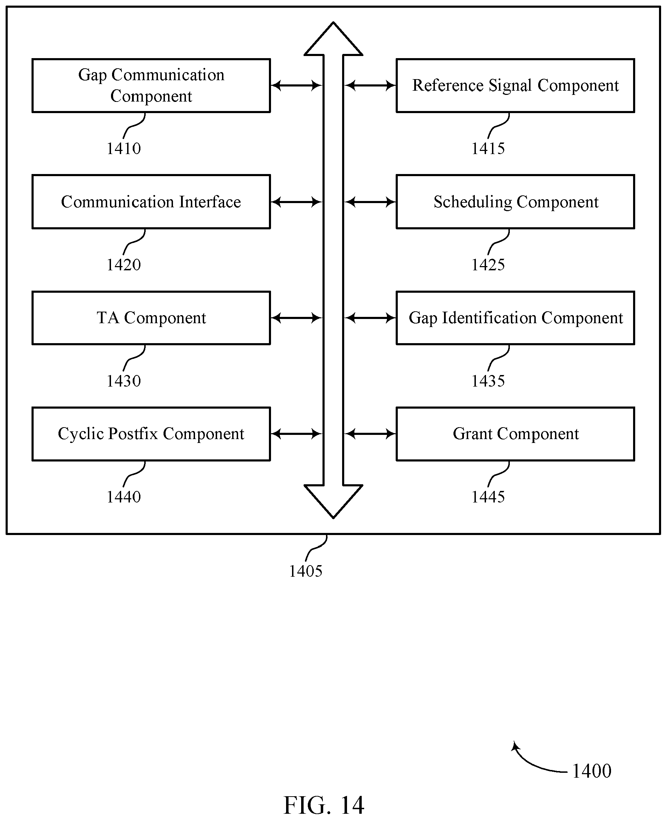

**FIG. 14** shows a block diagram 1400 of a communications manager 1405 that supports cyclic prefix extensions for unlicensed spectrum in accordance with aspects of the present disclosure. The communications manager 1405 may be an example of aspects of a communications manager 1215, a communications manager 1315, or a communications manager 1510 described herein. The communications manager 1405 may include a gap communication component 1410, a reference signal component 1415, a communication interface 1420, a scheduling component 1425, a TA component 1430, a gap identification component 1435, a cyclic postfix component 1440, and a grant component 1445. Each of these modules may communicate, directly or indirectly, with one another (e.g., via one or more buses).

The gap communication component 1410 may transmit, to a LTE, a request to transmit a reference signal based on one or more symbol periods of a gap between resources of a downlink channel and scheduled resources of an uplink channel.

The reference signal component 1415 may receive, from the UE and in a symbol preceding the scheduled resources of the uplink channel, the reference signal responsive to the request.

The communication interface 1420 may receive, from the UE, at least a first portion of an uplink message using the scheduled resources of the uplink channel.

In some examples, the communication interface 1420 may receive, from the UE, at least a first portion of an uplink message on a symbol preceding the scheduled resources of the uplink channel based on one or more symbol periods of a gap between resources of a downlink channel and the scheduled resources of the uplink channel.

In some examples, the communication interface 1420 may receive, from the UE, the uplink message on the resources of the uplink channel.

In some examples, the communication interface 1420 may receive, from the UE, the uplink message on the resources of the uplink channel.

In some examples, the communication interface 1420 may receive, from the first UE, an uplink message on the resources for the first uplink channel. In some examples, the communication interface 1420 may receive, from the UE, an uplink message on the scheduled resources and in accordance with the indication for the cyclic prefix extension.

The scheduling component 1425 may transmit, to a UE, a signal scheduling resources of an uplink channel.

In some examples, the scheduling component 1425 may transmit, to the UE, a signal scheduling resources of an uplink channel, where the resources of the uplink channel are scheduled in accordance with the timing advance value received from the UE. In some examples, the scheduling component 1425 may transmit, to a user equipment (UE), a signal scheduling resources of an uplink channel, where the signal includes an indication for a number of symbols of a cyclic prefix extension. In some examples, the number of symbols comprises 0 symbols or 1 symbol for the cyclic prefix extension. In some examples, the indication comprises a bit that is j ointly coded with a listen-before-talk category indication.

In some examples, the scheduling component 1425 may transmit, to a first UE, a first signal scheduling resources of first uplink channel.

The TA component 1430 may receive, from a UE, a timing advance value for the UE.

In some examples, the TA component 1430 may receive, from a LTE, a timing advance value for the UE.

The gap identification component 1435 may determine, based on the timing advance value received from the UE, one or more symbol periods of a gap between resources of a downlink channel and resources of an uplink channel.

The cyclic postfix component 1440 may transmit a cyclic postfix on at least a portion of a symbol period following the resources of the downlink channel based on the determining.

The grant component 1445 may transmit, to a second UE, a second signal granting resources of a second uplink channel, where the resources for the first uplink channel are allocated to at least one slot or symbol prior to the resources allocated for the second uplink channel.

In some cases, the gap communication component 1410, reference signal component 1415, communication interface 1420, scheduling component 1425, TA component 1430, gap identification component 1435,cyclic postfix component 1440, and the grant component 1445 may each be or be at least a part of a processor (e.g., a transceiver processor, or a radio processor, or a transmitter processor, or a receiver processor). The processor may be coupled with memory and execute instructions stored in the memory that enable the processor to perform or facilitate the features of the gap communication component 1410, reference signal component 1415, communication interface 1420, scheduling component 1425, TA component 1430, gap identification component 1435,cyclic postfix component 1440, and the grant component 1445 discussed herein.

**FIG. 15** shows a diagram of a system 1500 including a device 1505 that supports cyclic prefix extensions for unlicensed spectrum in accordance with aspects of the present disclosure. The device 1505 may be an example of or include the components of device 1205, device 1305, or a base station 105 as described herein. The device 1505 may include components for bi-directional voice and data communications including components for transmitting and receiving communications, including a communications manager 1510, a network communications manager 1515, a transceiver 1520, an antenna 1525, memory 1530, a processor 1540, and an inter-station communications manager 1545. These components may be in electronic communication via one or more buses (e.g., bus 1550).

The communications manager 1510 may transmit, to a LTE, a request to transmit a reference signal based on one or more symbol periods of a gap between resources of a downlink channel and scheduled resources of an uplink channel, receive, from the UE and in a symbol preceding the scheduled resources of the uplink channel, the reference signal responsive to the request, receive, from the UE, at least a first portion of an uplink message using the scheduled resources of the uplink channel, transmit, to a UE, a signal scheduling resources of an uplink channel, receive, from the UE, at least a first portion of an uplink message on a symbol preceding the scheduled resources of the uplink channel based on one or more symbol periods of a gap between resources of a downlink channel and the scheduled resources of the uplink channel, receive, from a UE, a timing advance value for the UE, determine, based on the timing advance value received from the UE, one or more symbol periods of a gap between resources of a downlink channel and resources of an uplink channel, transmit a cyclic postfix on at least a portion of a symbol period following the resources of the downlink channel based on the determining, receive, from the UE, the uplink message on the resources of the uplink channel, receive, from a UE, a timing advance value for the UE, transmit, to the UE, a signal scheduling resources of an uplink channel, where the resources of the uplink channel are scheduled in accordance with the timing advance value received from the UE, receive, from the UE, the uplink message on the resources of the uplink channel, transmit, to a first UE, a first signal scheduling resources of first uplink channel, transmit, to a second UE, a second signal granting resources of a second uplink channel, where the resources for the first uplink channel are allocated to at least one slot or symbol prior to the resources allocated for the second uplink channel, and receive, from the first UE, an uplink message on the resources for the first uplink channel.

The network communications manager 1515 may manage communications with the core network (e.g., via one or more wired backhaul links). For example, the network communications manager 1515 may manage the transfer of data communications for client devices, such as one or more UEs 115.

The transceiver 1520 may communicate bi-directionally, via one or more antennas, wired, or wireless links as described above. For example, the transceiver 1520 may represent a wireless transceiver and may communicate bi-directionally with another wireless transceiver. The transceiver 1520 may also include a modem to modulate the packets and provide the modulated packets to the antennas for transmission, and to demodulate packets received from the antennas.

In some cases, the wireless device may include a single antenna 1525. However, in some cases the device may have more than one antenna 1525, which may be capable of concurrently transmitting or receiving multiple wireless transmissions.

The memory 1530 may include RAM, ROM, or a combination thereof. The memory 1530 may store computer-readable code 1535 including instructions that, when executed by a processor (e.g., the processor 1540) cause the device to perform various functions described herein. In some cases, the memory 1530 may contain, among other things, a BIOS which may control basic hardware or software operation such as the interaction with peripheral components or devices.

The processor 1540 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1540 may be configured to operate a memory array using a memory controller. In some cases, a memory controller may be integrated into processor 1540. The processor 1540 may be configured to execute computer-readable instructions stored in a memory (e.g., the memory 1530) to cause the device 1505 to perform various functions (e.g., functions or tasks supporting cyclic prefix extensions for unlicensed spectrum).

The inter-station communications manager 1545 may manage communications with other base station 105, and may include a controller or scheduler for controlling communications with UEs 115 in cooperation with other base stations 105. For example, the inter-station communications manager 1545 may coordinate scheduling for transmissions to UEs 115 for various interference mitigation techniques such as beamforming or joint transmission. In some examples, the inter-station communications manager 1545 may provide an X2 interface within an LTE/LTE-A wireless communication network technology to provide communication between base stations 105.

The code 1535 may include instructions to implement aspects of the present disclosure, including instructions to support wireless communications. The code 1535 may be stored in a non-transitory computer-readable medium such as system memory or other type of memory. In some cases, the code 1535 may not be directly executable by the processor 1540 but may cause a computer (e.g., when compiled and executed) to perform functions described herein.

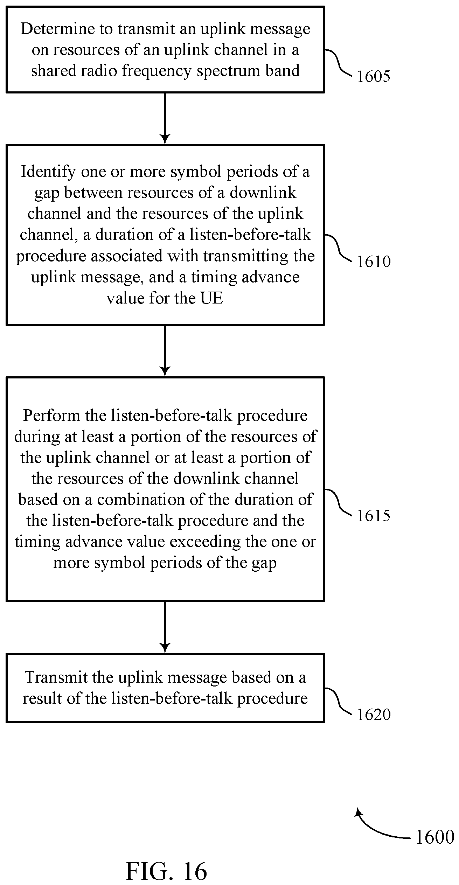

**FIG. 16** shows a flowchart illustrating a method 1600 that supports cyclic prefix extensions for unlicensed spectrum in accordance with aspects of the present disclosure. The operations of method 1600 may be implemented by a UE 115 or its components as described herein. For example, the operations of method 1600 may be performed by a communications manager as described with reference to FIGs. 8 through 11. In some examples, a UE may execute a set of instructions to control the functional elements of the UE to perform the functions described below. Additionally or alternatively, a UE may perform aspects of the functions described below using special-purpose hardware.

At 1605, the UE determines to transmit an uplink message on resources of an uplink channel in a shared radio frequency spectrum band. The operations of 1605 may be performed according to the methods described herein. In some examples, aspects of the operations of 1605 may be performed by an uplink message component as described with reference to FIGs. 8 through 11.

At 1610, the UE identifies one or more symbol periods of a gap between resources of a downlink channel and the resources of the uplink channel, a duration of a listen-before-talk procedure associated with transmitting the uplink message, and a timing advance value for the UE. The operations of 1610 may be performed according to the methods described herein. In some examples, aspects of the operations of 1610 may be performed by a gap identification component as described with reference to FIGs. 8 through 11.

At 1615, the UE performs the listen-before-talk procedure during at least a portion of the resources of the uplink channel or at least a portion of the resources of the downlink channel based on a combination of the duration of the listen-before-talk procedure and the timing advance value exceeding the one or more symbol periods of the gap. The operations of 1615 may be performed according to the methods described herein. In some examples, aspects of the operations of 1615 may be performed by an LBT component as described with reference to FIGs. 8 through 11.

At 1620, the UE transmits the uplink message based on a result of the listen-before-talk procedure. The operations of 1620 may be performed according to the methods described herein. In some examples, aspects of the operations of 1620 may be performed by a communication interface as described with reference to FIGs. 8 through 11.

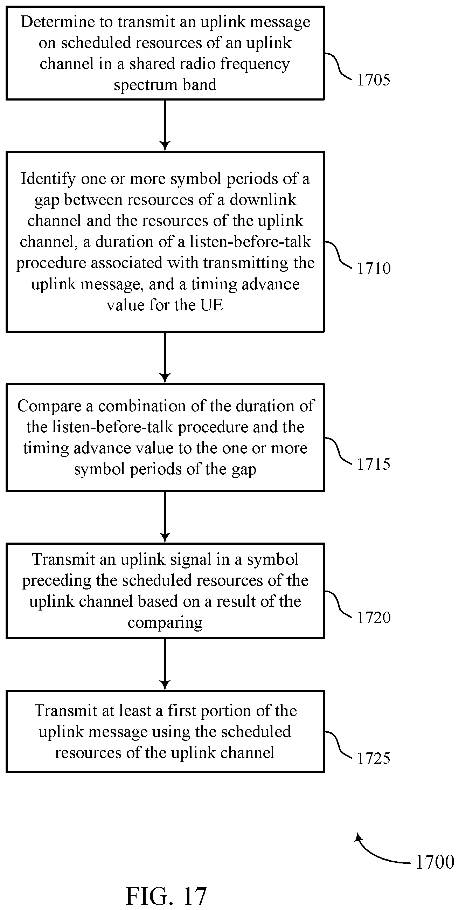

**FIG. 17** shows a flowchart illustrating a method 1700 that supports cyclic prefix extensions for unlicensed spectrum in accordance with aspects of the present disclosure. The operations of method 1700 may be implemented by a UE 115 or its components as described herein. For example, the operations of method 1700 may be performed by a communications manager as described with reference to FIGs. 8 through 11. In some examples, a UE may execute a set of instructions to control the functional elements of the UE to perform the functions described below. Additionally or alternatively, a UE may perform aspects of the functions described below using special-purpose hardware.

At 1705, the UE may determine to transmit an uplink message on scheduled resources of an uplink channel in a shared radio frequency spectrum band. The operations of 1705 may be performed according to the methods described herein. In some examples, aspects of the operations of 1705 may be performed by an uplink message component as described with reference to FIGs. 8 through 11.

At 1710, the UE may identify one or more symbol periods of a gap between resources of a downlink channel and the resources of the uplink channel, a duration of a listen-before-talk procedure associated with transmitting the uplink message, and a timing advance value for the UE. The operations of 1710 may be performed according to the methods described herein. In some examples, aspects of the operations of 1710 may be performed by a gap identification component as described with reference to FIGs. 8 through 11.

At 1715, the UE may compare a combination of the duration of the listen-before-talk procedure and the timing advance value to the one or more symbol periods of the gap. The operations of 1715 may be performed according to the methods described herein. In some examples, aspects of the operations of 1715 may be performed by a comparing component as described with reference to FIGs. 8 through 11.

At 1720, the UE may transmit an uplink signal in a symbol preceding the scheduled resources of the uplink channel based on a result of the comparing. The operations of 1720 may be performed according to the methods described herein. In some examples, aspects of the operations of 1720 may be performed by a gap communication component as described with reference to FIGs. 8 through 11.

At 1725, the UE may transmit at least a first portion of the uplink message using the scheduled resources of the uplink channel. The operations of 1725 may be performed according to the methods described herein. In some examples, aspects of the operations of 1725 may be performed by a communication interface as described with reference to FIGs. 8 through 11.

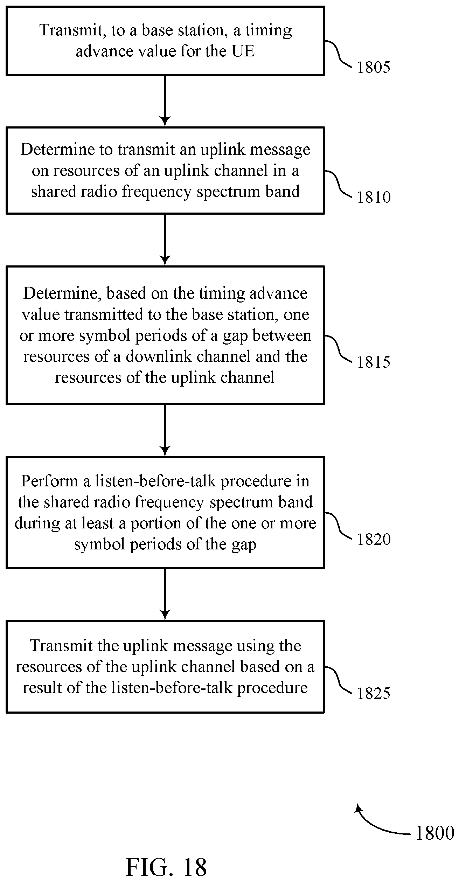

**FIG. 18** shows a flowchart illustrating a method 1800 that supports cyclic prefix extensions for unlicensed spectrum in accordance with aspects of the present disclosure. The operations of method 1800 may be implemented by a UE 115 or its components as described herein. For example, the operations of method 1800 may be performed by a communications manager as described with reference to FIGs. 8 through 11. In some examples, a UE may execute a set of instructions to control the functional elements of the UE to perform the functions described below. Additionally or alternatively, a UE may perform aspects of the functions described below using special-purpose hardware.

At 1805, the UE may transmit, to a base station, a timing advance value for the UE. The operations of 1805 may be performed according to the methods described herein. In some examples, aspects of the operations of 1805 may be performed by a TA component as described with reference to FIGs. 8 through 11.

At 1810, the UE may determine to transmit an uplink message on resources of an uplink channel in a shared radio frequency spectrum band. The operations of 1810 may be performed according to the methods described herein. In some examples, aspects of the operations of 1810 may be performed by an uplink message component as described with reference to FIGs. 8 through 11.

At 1815, the UE may determine, based on the timing advance value transmitted to the base station, one or more symbol periods of a gap between resources of a downlink channel and the resources of the uplink channel. The operations of 1815 may be performed according to the methods described herein. In some examples, aspects of the operations of 1815 may be performed by a gap identification component as described with reference to FIGs. 8 through 11.

At 1820, the LTE may perform a listen-before-talk procedure in the shared radio frequency spectrum band during at least a portion of the one or more symbol periods of the gap. The operations of 1820 may be performed according to the methods described herein. In some examples, aspects of the operations of 1820 may be performed by an LBT component as described with reference to FIGs. 8 through 11.

At 1825, the UE may transmit the uplink message using the resources of the uplink channel based on a result of the listen-before-talk procedure. The operations of 1825 may be performed according to the methods described herein. In some examples, aspects of the operations of 1825 may be performed by a communication interface as described with reference to FIGs. 8 through 11.

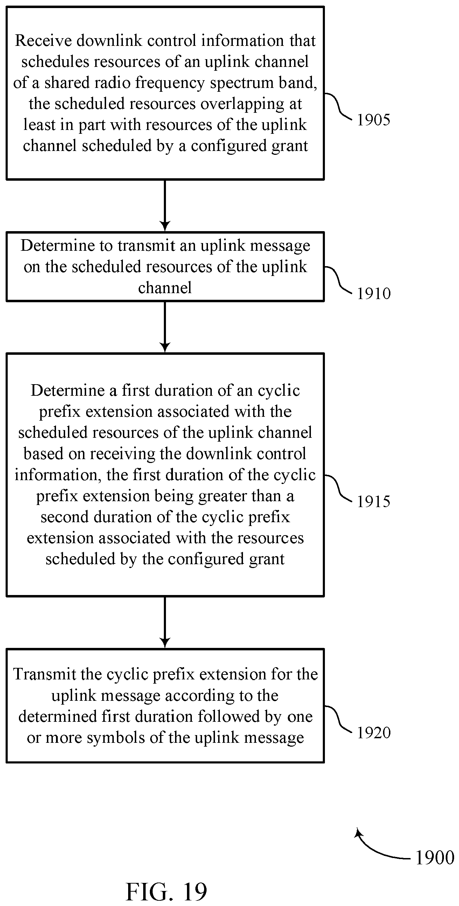

**FIG. 19** shows a flowchart illustrating a method 1900 that supports cyclic prefix extensions for unlicensed spectrum in accordance with aspects of the present disclosure. The operations of method 1900 may be implemented by a UE 115 or its components as described herein. For example, the operations of method 1900 may be performed by a communications manager as described with reference to FIGs. 8 through 11. In some examples, a UE may execute a set of instructions to control the functional elements of the UE to perform the functions described below. Additionally or alternatively, a UE may perform aspects of the functions described below using special-purpose hardware.

At 1905, the UE may receive downlink control information that schedules resources of an uplink channel of a shared radio frequency spectrum band, the scheduled resources overlapping at least in part with resources of the uplink channel scheduled by a configured grant. The operations of 1905 may be performed according to the methods described herein. In some examples, aspects of the operations of 1905 may be performed by a scheduling component as described with reference to FIGs. 8 through 11.

At 1910, the UE may determine to transmit an uplink message on the scheduled resources of the uplink channel. The operations of 1910 may be performed according to the methods described herein. In some examples, aspects of the operations of 1910 may be performed by an uplink message component as described with reference to FIGs. 8 through 11.

At 1915, the UE may determine a first duration of a cyclic prefix extension associated with the scheduled resources of the uplink channel based on receiving the downlink control information, the first duration of the cyclic prefix extension being greater than a second duration of the cyclic prefix extension associated with the resources scheduled by the configured grant. The operations of 1915 may be performed according to the methods described herein. In some examples, aspects of the operations of 1915 may be performed by a CPE component as described with reference to FIGs. 8 through 11.

At 1920, the UE may transmit the cyclic prefix extension for the uplink message according to the determined first duration followed by one or more symbols of the uplink message. The operations of 1920 may be performed according to the methods described herein. In some examples, aspects of the operations of 1920 may be performed by a gap communication component as described with reference to FIGs. 8 through 11.

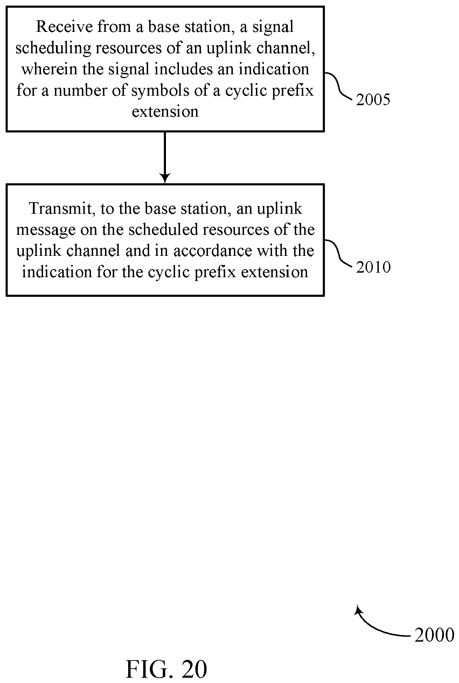

**FIG. 20** shows a flowchart illustrating a method 2000 that supports cyclic prefix extensions for unlicensed spectrum in accordance with aspects of the present disclosure. The operations of method 2000 may be implemented by a UE 115 or its components as described herein. For example, the operations of method 2000 may be performed by a communications manager as described with reference to FIGs. 8 through 11. In some examples, a UE may execute a set of instructions to control the functional elements of the UE to perform the functions described below. Additionally or alternatively, a UE may perform aspects of the functions described below using special-purpose hardware.

At 2005, the UE may receive from a base station, a signal scheduling resources of an uplink channel, wherein the signal includes an indication for a number of symbols of a cyclic prefix extension. The operations of 2005 may be performed according to the methods described herein. In some examples, aspects of the operations 2005 may be performed by a scheduling component as described with reference to FIGs. 8 through 11.

At 2010, the UE may transmit, to the base station, an uplink message on the scheduled resources of the uplink channel and in accordance with the indication for the cyclic prefix extension. The operations of 2010 may be performed according to the method described herein. In some examples, aspects of operations 2010 may be performed by a communication interface as described with reference to FIGs. 8 through 11.

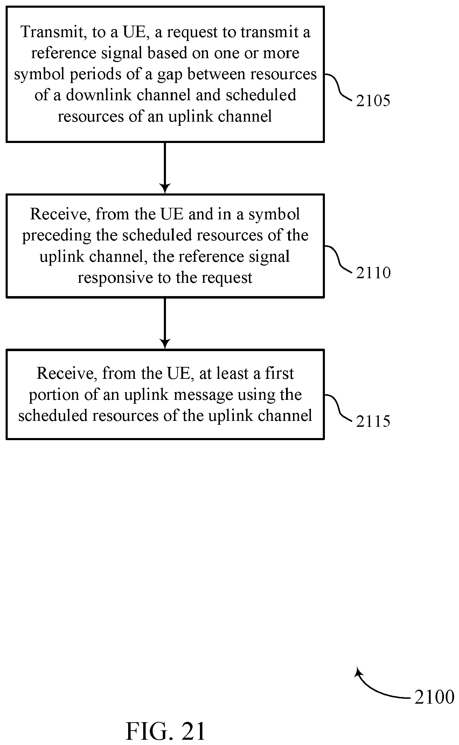

**FIG. 21** shows a flowchart illustrating a method 2100 that supports cyclic prefix extensions for unlicensed spectrum in accordance with aspects of the present disclosure. The operations of method 2100 may be implemented by a base station 105 or its components as described herein. For example, the operations of method 2100 may be performed by a communications manager as described with reference to FIGs. 12 through 15. In some examples, a base station may execute a set of instructions to control the functional elements of the base station to perform the functions described below. Additionally or alternatively, a base station may perform aspects of the functions described below using special-purpose hardware.

At 2105, the base station may transmit, to a UE, a request to transmit a reference signal based on one or more symbol periods of a gap between resources of a downlink channel and scheduled resources of an uplink channel. The operations of 2105 may be performed according to the methods described herein. In some examples, aspects of the operations of 2105 may be performed by a gap communication component as described with reference to FIGs. 12 through 15.

At 2110, the base station may receive, from the UE and in a symbol preceding the scheduled resources of the uplink channel, the reference signal responsive to the request. The operations of 2110 may be performed according to the methods described herein. In some examples, aspects of the operations of 2110 may be performed by a reference signal component as described with reference to FIGs. 12 through 15.

At 2115, the base station may receive, from the UE, at least a first portion of an uplink message using the scheduled resources of the uplink channel. The operations of 2115 may be performed according to the methods described herein. In some examples, aspects of the operations of 2115 may be performed by a communication interface as described with reference to FIGs. 12 through 15.

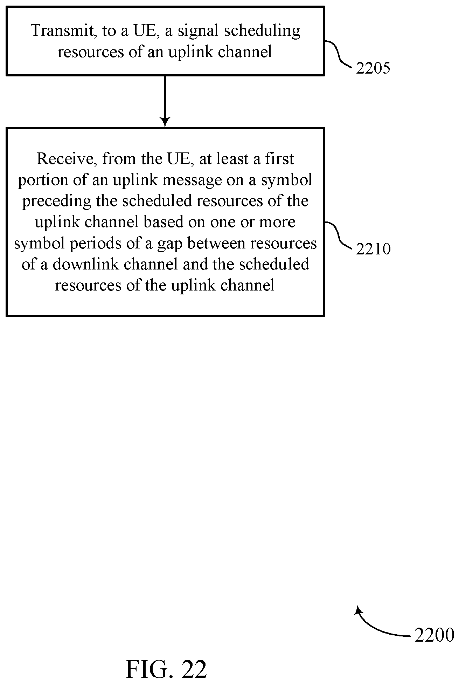

**FIG. 22** shows a flowchart illustrating a method 2200 that supports cyclic prefix extensions for unlicensed spectrum in accordance with aspects of the present disclosure. The operations of method 2200 may be implemented by a base station 105 or its components as described herein. For example, the operations of method 2200 may be performed by a communications manager as described with reference to FIGs. 12 through 15. In some examples, a base station may execute a set of instructions to control the functional elements of the base station to perform the functions described below. Additionally or alternatively, a base station may perform aspects of the functions described below using special-purpose hardware.

At 2205, the base station may transmit, to a LTE, a signal scheduling resources of an uplink channel. The operations of 2205 may be performed according to the methods described herein. In some examples, aspects of the operations of 2205 may be performed by a scheduling component as described with reference to FIGs. 12 through 15.

At 2210, the base station may receive, from the UE, at least a first portion of an uplink message on a symbol preceding the scheduled resources of the uplink channel based on one or more symbol periods of a gap between resources of a downlink channel and the scheduled resources of the uplink channel. The operations of 2210 may be performed according to the methods described herein. In some examples, aspects of the operations of 2210 may be performed by a communication interface as described with reference to FIGs. 12 through 15.

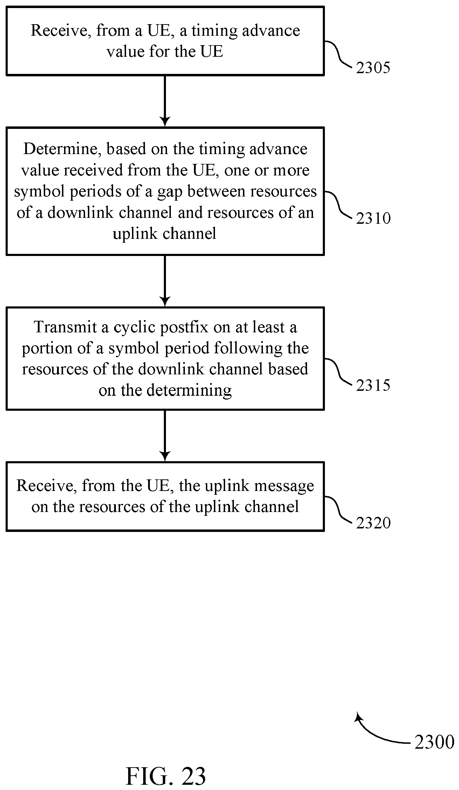

**FIG. 23** shows a flowchart illustrating a method 2300 that supports cyclic prefix extensions for unlicensed spectrum in accordance with aspects of the present disclosure. The operations of method 2300 may be implemented by a base station 105 or its components as described herein. For example, the operations of method 2300 may be performed by a communications manager as described with reference to FIGs. 12 through 15. In some examples, a base station may execute a set of instructions to control the functional elements of the base station to perform the functions described below. Additionally or alternatively, a base station may perform aspects of the functions described below using special-purpose hardware.

At 2305, the base station may receive, from a UE, a timing advance value for the UE. The operations of 2305 may be performed according to the methods described herein. In some examples, aspects of the operations of 2305 may be performed by a TA component as described with reference to FIGs. 12 through 15.

At 2310, the base station may determine, based on the timing advance value received from the UE, one or more symbol periods of a gap between resources of a downlink channel and resources of an uplink channel. The operations of 2310 may be performed according to the methods described herein. In some examples, aspects of the operations of 2310 may be performed by a gap identification component as described with reference to FIGs. 12 through 15.

At 2315, the base station may transmit a cyclic postfix on at least a portion of a symbol period following the resources of the downlink channel based on the determining. The operations of 2315 may be performed according to the methods described herein. In some examples, aspects of the operations of 2315 may be performed by a cyclic postfix component as described with reference to FIGs. 12 through 15.

At 2320, the base station may receive, from the UE, the uplink message on the resources of the uplink channel. The operations of 2320 may be performed according to the methods described herein. In some examples, aspects of the operations of 2320 may be performed by a communication interface as described with reference to FIGs. 12 through 15.

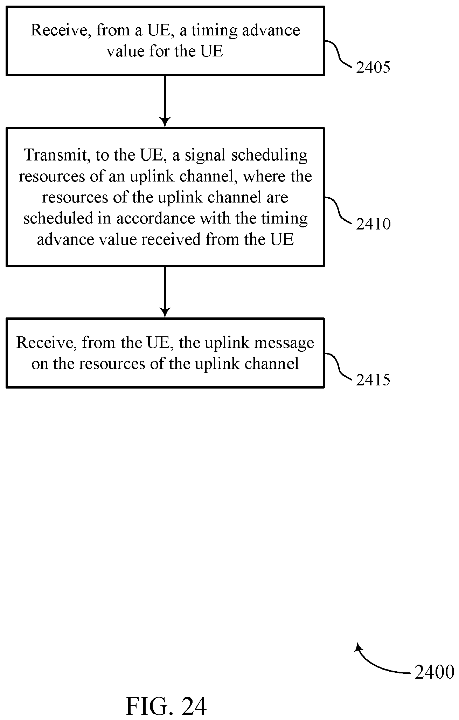

**FIG. 24** shows a flowchart illustrating a method 2400 that supports cyclic prefix extensions for unlicensed spectrum in accordance with aspects of the present disclosure. The operations of method 2400 may be implemented by a base station 105 or its components as described herein. For example, the operations of method 2400 may be performed by a communications manager as described with reference to FIGs. 12 through 15. In some examples, a base station may execute a set of instructions to control the functional elements of the base station to perform the functions described below. Additionally or alternatively, a base station may perform aspects of the functions described below using special-purpose hardware.

At 2405, the base station may receive, from a UE, a timing advance value for the UE. The operations of 2405 may be performed according to the methods described herein. In some examples, aspects of the operations of 2405 may be performed by a TA component as described with reference to FIGs. 12 through 15.

At 2410, the base station may transmit, to the UE, a signal scheduling resources of an uplink channel, where the resources of the uplink channel are scheduled in accordance with the timing advance value received from the UE. The operations of 2410 may be performed according to the methods described herein. In some examples, aspects of the operations of 2410 may be performed by a scheduling component as described with reference to FIGs. 12 through 15.

At 2415, the base station may receive, from the UE, the uplink message on the resources of the uplink channel. The operations of 2415 may be performed according to the methods described herein. In some examples, aspects of the operations of 2415 may be performed by a communication interface as described with reference to FIGs. 12 through 15.

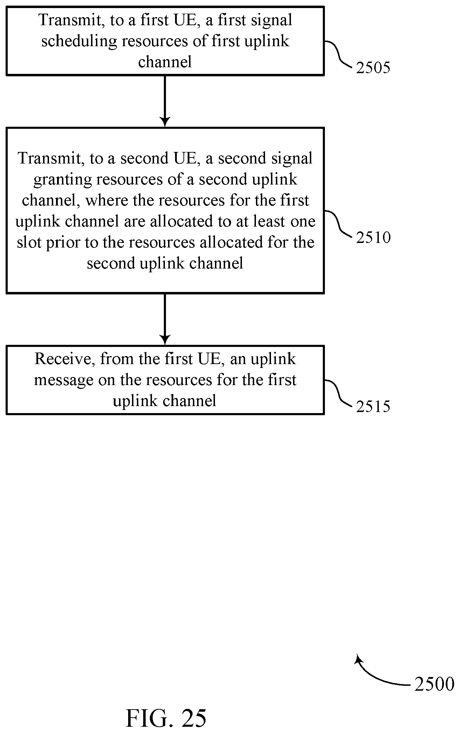

**FIG. 25** shows a flowchart illustrating a method 2500 that supports cyclic prefix extensions for unlicensed spectrum in accordance with aspects of the present disclosure. The operations of method 2500 may be implemented by a base station 105 or its components as described herein. For example, the operations of method 2500 may be performed by a communications manager as described with reference to FIGs. 12 through 15. In some examples, a base station may execute a set of instructions to control the functional elements of the base station to perform the functions described below. Additionally or alternatively, a base station may perform aspects of the functions described below using special-purpose hardware.

At 2505, the base station may transmit, to a first UE, a first signal scheduling resources of first uplink channel. The operations of 2505 may be performed according to the methods described herein. In some examples, aspects of the operations of 2505 may be performed by a scheduling component as described with reference to FIGs. 12 through 15.

At 2510, the base station may transmit, to a second UE, a second signal granting resources of a second uplink channel, where the resources for the first uplink channel are allocated to at least one slot or symbol prior to the resources allocated for the second uplink channel. The operations of 2510 may be performed according to the methods described herein. In some examples, aspects of the operations of 2510 may be performed by a grant component as described with reference to FIGs. 12 through 15.

At 2515, the base station may receive, from the first UE, an uplink message on the resources for the first uplink channel. The operations of 2515 may be performed according to the methods described herein. In some examples, aspects of the operations of 2515 may be performed by a communication interface as described with reference to FIGs. 12 through 15.

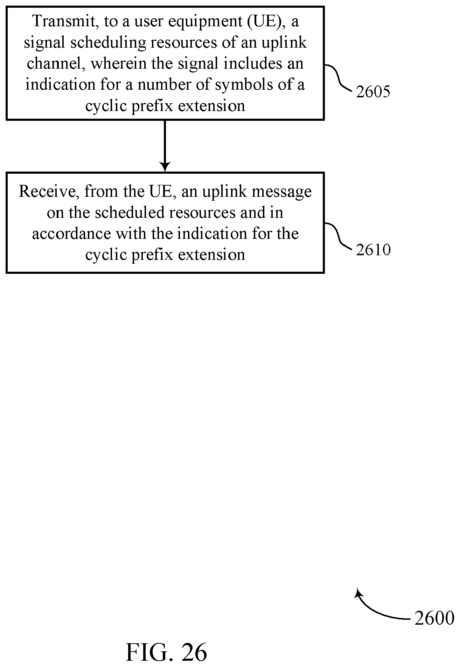

**FIG. 26** shows a flowchart illustrating a method 2600 that supports cyclic prefix extensions for unlicensed spectrum in accordance with aspects of the present disclosure. The operations of method 2600 may be implemented by a base station 105 or its components as described herein. For example, the operations of method 2600 may be performed by a communications manager as described with reference to FIGs. 12 through 15. In some examples, a base station may execute a set of instructions to control the functional elements of the base station to perform the functions described below. Additionally or alternatively, a base station may perform aspects of the functions described below using special-purpose hardware.

At 2605, the base station may transmit, to a user equipment (UE), a signal scheduling resources of an uplink channel, where the signal includes an indication for a number of symbols of a cyclic prefix extension. The operations of 2605 may be performed according to methods described herein. In some examples, aspects of the operations 2605 may be performed by a scheduling component as described with reference to FIGs. 12 through 15.

At 2610, the base station may receive, from the UE, an uplink message on the scheduled resources and in accordance with the indication for the cyclic prefix extension. The operations of 2605 may be performed according to methods described herein. In some examples, aspects of the operations 2605 may be performed by a communication interface as described with reference to FIGs. 12 through 15

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special purpose computer. By way of example, and not limitation, non-transitory computer-readable media may include random-access memory (RAM), read-only memory (ROM), electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

## Claims

1. A method (1600) for wireless communications at a user equipment, UE, comprising:
determining (1605) to transmit an uplink message on resources of an uplink channel in a shared radio frequency spectrum band;
identifying (1610) one or more symbol periods of a gap between resources of a downlink channel and the resources of the uplink channel, a duration of a listen-before-talk procedure associated with transmitting the uplink message, and a timing advance value for the UE;
performing (1615) the listen-before-talk procedure during at least a portion of the resources of the uplink channel or at least a portion of the resources of the downlink channel based at least in part on a combination of the duration of the listen-before-talk procedure and the timing advance value exceeding the one or more symbol periods of the gap; and
transmitting (1620) the uplink message based at least in part on a result of the listen-before-talk procedure.

2. The method of claim 1, further comprising:
identifying that a duration of a cyclic prefix extension is zero based at least in part on the duration of the listen-before-talk procedure and the timing advance value for the UE.

3. The method of claim 1, wherein the listen-before-talk procedure is performed during at least the portion of the resources of the uplink channel or at least the portion of the downlink channel based at least in part on identifying that a duration of a cyclic prefix extension is zero, a subcarrier spacing of the resources of the uplink channel, or both.

4. The method of claim 1, further comprising:
comparing a combination of the duration of the listen-before-talk procedure and the timing advance value to the one or more symbol periods of the gap; and
transmitting an uplink signal in a symbol preceding the scheduled resources of the uplink channel based at least in part on a result of the comparing, wherein at least a first portion of the uplink message is transmitted using the resources of the uplink channel.

5. The method of claim 4, further comprising:
transmitting a cyclic prefix extension in at least a portion of a second symbol preceding the scheduled resources of the uplink channel, wherein a duration of the cyclic prefix extension is based at least in part on the combination of the duration of the listen-before-talk procedure and the timing advance value.

6. The method of claim 4, wherein transmitting the uplink signal comprises:
transmitting a reference signal in the symbol preceding the scheduled resources of the uplink channel, wherein the reference signal comprises a demodulation reference signal or a sounding reference signal.

7. The method of claim 6, wherein a repetition of the reference signal is transmitted in the scheduled resources of the uplink channel.

8. The method of claim 6, further comprising:
receiving a downlink communication allocating the scheduled resources of the uplink channel and requesting transmission of the reference signal, wherein the reference signal is transmitted in the symbol preceding the scheduled resources of the uplink channel based at least in part on the downlink communication.

9. The method of claim 4, further comprising:
determining that the combination of the duration of the listen-before-talk procedure and the timing advance value results in a cyclic prefix extension duration exceeding a cyclic prefix extension duration threshold; wherein the uplink signal is transmitted in the symbol preceding the scheduled resources of the uplink channel based at least in part on the determining that the combination results in the cyclic prefix extension duration exceeding the cyclic prefix extension duration threshold, a subcarrier spacing of the resources of the uplink channel, or both.

10. The method of claim 4, wherein transmitting the uplink signal in the symbol preceding the scheduled resources of the uplink channel comprises:
transmitting at least a second portion of the uplink message in the symbol preceding the scheduled resources of the uplink channel.

11. The method of claim 10, further comprising:
determining a transport block size for transmission of at least the second portion of the uplink message in the symbol preceding the scheduled resources of the uplink channel, wherein the uplink message is transmitted in accordance with the transport block size.

12. The method of claim 10, further comprising:
shifting a starting location for transmitting at least the second portion of the uplink message on the resources of the uplink channel by one symbol, wherein at least the second portion of the uplink message is transmitted in accordance with the starting location; wherein at least the second portion of the uplink message is transmitted with a transport block size based on transmission of the uplink message on the scheduled resources of the uplink channel.

13. The method of claim 1, wherein performing the listen-before talk procedure comprises:
performing the listen-before-talk procedure in the shared radio frequency spectrum band during at least a portion of the one or more symbol periods of the gap; further comprising:
transmitting a cyclic prefix extension in at least a second portion of the one or more symbol periods of the gap, wherein a duration of the cyclic prefix extension is based at least in part on a combination of the duration of the listen-before-talk procedure and the timing advance value that is transmitted to a base station.

14. An apparatus for wireless communications at a user equipment, UE, comprising:
means for determining to transmit an uplink message on resources of an uplink channel in a shared radio frequency spectrum band;
means for identifying one or more symbol periods of a gap between resources of a downlink channel and the resources of the uplink channel, a duration of a listen-before-talk procedure associated with transmitting the uplink message, and a timing advance value for the UE;
means for performing the listen-before-talk procedure during at least a portion of the resources of the uplink channel or at least a portion of the resources of the downlink channel based at least in part on a combination of the duration of the listen-before-talk procedure and the timing advance value exceeding the one or more symbol periods of the gap; and
means for transmitting the uplink message based at least in part on a result of the listen-before-talk procedure.

15. A computer program comprising instructions which when the instructions are executed on a processor of an apparatus for wireless communications at a user equipment, UE, cause said apparatus to carry out the method of claims 1 to 13.

## Patentansprüche

1. Verfahren (1600) für drahtlose Kommunikation an einem Benutzergerät, UE, umfassend:
Bestimmen (1605), eine Aufwärtsstrecken-Nachricht auf Ressourcen eines Aufwärtsstrecken-Kanals in einem gemeinsam genutzten Funkfrequenzband zu übertragen;
Identifizieren (1610) einer oder mehrerer Symbolperioden einer Lücke zwischen Ressourcen eines Abwärtsstrecken-Kanals und den Ressourcen des Aufwärtsstrecken-Kanals, einer Dauer einer Abhör-vor-Gespräch-Prozedur, die mit dem Übertragen der Aufwärtsstrecken-Nachricht verbunden ist, und eines Zeitvorlaufwerts für das UE;
Durchführen (1615) der Abhör-vor-Gespräch-Prozedur während mindestens eines Teils der Ressourcen des Aufwärtsstrecken-Kanals oder mindestens eines Teils der Ressourcen des Abwärtsstrecken-Kanals, mindestens teilweise basierend auf einer Kombination aus der Dauer der Abhör-vor-Gespräch-Prozedur und dem Zeitvorlaufwert, der die eine oder mehrere Symbolperioden der Lücke überschreitet; und
Senden (1620) der Aufwärtsstrecken-Nachricht zumindest teilweise auf der Grundlage eines Ergebnisses der Abhör-vor-Gespräch-Prozedur.

2. Verfahren nach Anspruch 1 umfasst außerdem:
Identifizierung, dass die Dauer einer zyklischen Präfixerweiterung Null ist, zumindest teilweise auf der Grundlage der Dauer der Abhör-vor-Gespräch-Prozedur und des Zeitvorlaufwertes für das UE.

3. Verfahren nach Anspruch 1, wobei die Abhör-vor-Gespräch-Prozedur zumindest während des Teils der Ressourcen des Aufwärtsstrecken-Kanals oder zumindest des Teils des Abwärtsstrecken-Kanals zumindest teilweise auf der Grundlage der Feststellung, dass eine Dauer einer zyklischen Präfixerweiterung Null ist, eines Unterträgerabstands der Ressourcen des Aufwärtsstrecken-Kanals oder beidem durchgeführt wird.

4. Verfahren nach Anspruch 1, ferner umfassend:
Vergleichen einer Kombination aus der Dauer der Abhör-vor-Gespräch-Prozedur und dem Zeitvorlaufwert mit der einen oder mehreren Symbolperioden der Lücke; und
Übertragen eines Aufwärtsstrecken-Signals in einem Symbol, das den geplanten Ressourcen des Aufwärtsstrecken-Kanals vorausgeht, zumindest teilweise auf der Grundlage eines Ergebnisses des Vergleichs, wobei zumindest ein erster Teil der Aufwärtsstrecken-Nachricht unter Verwendung der Ressourcen des Aufwärtsstrecken-Kanals übertragen wird.

5. Verfahren nach Anspruch 4, ferner aufweisend:
Übertragen einer zyklischen Präfixerweiterung in mindestens einem Teil eines zweiten Symbols, das den geplanten Ressourcen des Aufwärtsstrecken-Kanals vorausgeht, wobei eine Dauer der zyklischen Präfixerweiterung mindestens teilweise auf der Kombination der Dauer der Abhör-vor-Gespräch-Prozedur und des Zeitvorrückungswertes basiert.

6. Verfahren nach Anspruch 4, wobei das Übertragen des Aufwärtssignals umfasst:
Übertragen eines Referenzsignals in dem Symbol, das den geplanten Ressourcen des Aufwärtsstrecken-Kanals vorausgeht, wobei das Referenzsignal ein Demodulationsreferenzsignal oder ein Sondierungsreferenzsignal umfasst.

7. Verfahren nach Anspruch 6, wobei eine Wiederholung des Referenzsignals in den geplanten Ressourcen des Aufwärtsstrecken-Kanals übertragen wird.

8. Verfahren nach Anspruch 6, ferner umfassend:
Empfangen einer Abwärtsstrecken-Kommunikation, die die geplanten Ressourcen des Aufwärtsstrecken-Kanals zuweist und die Übertragung des Referenzsignals anfordert, wobei das Referenzsignal in dem Symbol übertragen wird, das den geplanten Ressourcen des Aufwärtsstrecken-Kanals zumindest teilweise auf der Grundlage der Abwärtsstrecken-Kommunikation vorausgeht.

9. Verfahren nach Anspruch 4, ferner umfassend:
Bestimmen, dass die Kombination der Dauer des Abhörvorgangs und des Zeitvorrückungswerts zu einer zyklischen Präfix-Verlängerungsdauer führt, die einen Schwellenwert für die zyklische Präfix-Verlängerungsdauer überschreitet; wobei das Aufwärtsstreckensignal in dem Symbol vor den geplanten Ressourcen des Aufwärtsstreckenkanals zumindest teilweise auf der Grundlage der Bestimmung, dass die Kombination dazu führt, dass die zyklische Präfix-Verlängerungsdauer den Schwellenwert für die zyklische Präfix-Verlängerungsdauer überschreitet, eines Unterträgerabstands der Ressourcen des Aufwärtsstreckenkanals oder von beidem übertragen wird.

10. Verfahren nach Anspruch 4, wobei das Übertragen des Aufwärtssignals in dem Symbol, das den geplanten Ressourcen des Aufwärtskanals vorausgeht, umfasst:
Übertragen mindestens eines zweiten Teils der Aufwärtsstrecken-Nachricht in dem Symbol, das den geplanten Ressourcen des Aufwärtsstrecken-Kanals vorausgeht.

11. Verfahren nach Anspruch 10, ferner umfassend:
Bestimmen einer Transportblockgröße für die Übertragung von mindestens dem zweiten Teil der Aufwärtsstrecken-Nachricht in dem Symbol, das den geplanten Ressourcen des Aufwärtsstrecken-Kanals vorausgeht, wobei die Aufwärtsstrecken-Nachricht in Übereinstimmung mit der Transportblockgröße übertragen wird.

12. Verfahren nach Anspruch 10, ferner umfassend:
Verschieben einer Startposition für die Übertragung von mindestens dem zweiten Teil der Aufwärtsstrecken-Nachricht auf den Ressourcen des Aufwärtsstrecken-Kanals um ein Symbol, wobei mindestens der zweite Teil der Aufwärtsstrecken-Nachricht in Übereinstimmung mit der Startposition übertragen wird; wobei mindestens der zweite Teil der Aufwärtsstrecken-Nachricht mit einer Transportblockgröße basierend auf der Übertragung der Aufwärtsstrecken-Nachricht auf den geplanten Ressourcen des Aufwärtsstrecken-Kanals übertragen wird.

13. Verfahren nach Anspruch 1, wobei das Durchführen der Abhör-vor-Gespräch-Prozedur umfasst:
Durchführen der Abhör-vor-Gespräch-Prozedur in dem gemeinsam genutzten Funkfrequenzspektrum-Band während mindestens eines Teils der einen oder mehreren Symbolperioden der Lücke; ferner umfassend:
Übertragen einer zyklischen Präfixerweiterung in mindestens einem zweiten Teil der einen oder mehreren Symbolperioden der Lücke, wobei eine Dauer der zyklischen Präfixerweiterung mindestens teilweise auf einer Kombination der Dauer der Abhör-vor-Gespräch-Prozedur und des Zeitvorrückungswerts, der an eine Basisstation übertragen wird, basiert.

14. Vorrichtung zur drahtlosen Kommunikation an einem Benutzergerät, UE, aufweisend:
Mittel zum Bestimmen der Übertragung einer Aufwärtsnachricht auf Ressourcen eines Aufwärtskanals in einem gemeinsam genutzten Funkfrequenzband;
Mittel zum Identifizieren einer oder mehrerer Symbolperioden einer Lücke zwischen Ressourcen eines Abwärtsstrecken-Kanals und den Ressourcen des Aufwärtsstrecken-Kanals, einer Dauer einer Abhör-vor-Gespräch-Prozedur, die mit dem Übertragen der Aufwärtsstrecken-Nachricht verbunden ist, und eines Zeitvorlaufwerts für das UE;
Mittel zum Durchführen der Abhör-vor-Gespräch-Prozedur während mindestens eines Teils der Ressourcen des Aufwärtskanals oder mindestens eines Teils der Ressourcen des Abwärtskanals, die mindestens teilweise auf einer Kombination aus der Dauer der Abhör-vor-Gespräch-Prozedur und dem Zeitvorlaufwert basieren, der die eine oder mehrere Symbolperioden der Lücke überschreitet; und
Mittel zum Übertragen der Aufwärtsnachricht, die zumindest teilweise auf einem Ergebnis der Abhör-vor-Gespräch-Prozedur basieren.

15. Computerprogramm mit Befehlen, die, wenn die Befehle auf einem Prozessor eines Geräts für drahtlose Kommunikation an einem Benutzergerät, UE, ausgeführt werden, das Gerät veranlassen, das Verfahren nach einem der Ansprüche 1 bis 13 auszuführen.

## Revendications

1. Un procédé (1600) de communication sans fil au niveau d'un équipement utilisateur, UE, comprenant :
la détermination (1605) de transmettre un message de liaison montante sur des ressources d'un canal de liaison montante dans une bande de spectre radiofréquence partagé ;
l'identification (1610) d'une ou plusieurs périodes de symbole d'un intervalle entre des ressources d'un canal de liaison descendante et les ressources du canal de liaison montante, d'une durée d'une procédure d'écoute avant d'émettre associée à la transmission du message de liaison montante, et d'une valeur d'avance temporelle pour l'UE ;
la réalisation (1615) de la procédure d'écoute avant d'émettre durant au moins une partie des ressources du canal de liaison montante ou au moins une partie des ressources du canal de liaison descendante, sur la base au moins en partie d'une combinaison de la durée de la procédure d'écoute avant d'émettre et de la valeur d'avance temporelle dépassant les une ou plusieurs périodes de symbole de l'intervalle ; et
la transmission (1620) du message de liaison montante, sur la base au moins en partie d'un résultat de la procédure d'écoute avant d'émettre.

2. Le procédé selon la revendication 1, comprenant en outre :
l'identification qu'une durée d'une extension de préfixe cyclique vaut zéro, sur la base au moins en partie de la durée de la procédure d'écoute avant d'émettre et de la valeur d'avance temporelle pour l'UE.

3. Le procédé selon la revendication 1, dans lequel la procédure d'écoute avant d'émettre est réalisée durant au moins la partie des ressources du canal de liaison montante ou au moins la partie du canal de liaison descendante, sur la base au moins en partie de l'identification qu'une durée d'une extension de préfixe cyclique vaut zéro, d'un espacement de sous-porteuse des ressources du canal de liaison montante, ou des deux.

4. Le procédé selon la revendication 1, comprenant en outre :
la comparaison d'une combinaison de la durée de la procédure d'écoute avant d'émettre et de la valeur d'avance temporelle aux une ou plusieurs périodes de symbole de l'intervalle ; et
la transmission du signal de liaison montante dans un symbole précédant les ressources planifiées du canal de liaison montante, sur la base au moins en partie d'un résultat de la comparaison, dans lequel au moins une première partie du message de liaison montante est transmise en utilisant les ressources du canal de liaison montante.

5. Le procédé selon la revendication 4, comprenant en outre :
la transmission d'une extension de préfixe cyclique dans au moins une partie d'un second symbole précédant les ressources planifiées du canal de liaison montante, dans lequel une durée de l'extension de préfixe cyclique est basée au moins en partie sur la combinaison de la durée de la procédure d'écoute avant d'émettre et de la valeur d'avance temporelle.

6. Le procédé selon la revendication 4, dans lequel la transmission du message de liaison montante comprend :
la transmission d'un signal de référence dans le symbole précédant les ressources planifiées du canal de liaison montante, dans lequel le signal de référence comprend un signal de référence de démodulation ou un signal de référence de sondage.

7. Le procédé selon la revendication 6, dans lequel une répétition du signal de référence est transmise dans les ressources planifiées du canal de liaison montante.

8. Le procédé selon la revendication 6, comprenant en outre :
la réception d'une communication de liaison descendante attribuant les ressources planifiées du canal de liaison montante et requérant une transmission du signal de référence, dans lequel le signal de référence est transmis dans le symbole précédant les ressources planifiées du canal de liaison montante sur la base au moins en partie de la communication de liaison descendante.

9. Le procédé selon la revendication 4, comprenant en outre :
la détermination que la combinaison de la durée de la procédure d'écoute avant d'émettre et de la valeur d'avance temporelle entraîne qu'une durée d'extension de préfixe cyclique dépasse un seuil de durée d'extension de préfixe cyclique ; dans lequel le signal de liaison montante est transmis dans le symbole précédant les ressources planifiées du canal de liaison montante sur la base au moins en partie de la détermination que la combinaison entraîne que la durée d'extension de préfixe cyclique dépasse le seuil de durée d'extension de préfixe cyclique, d'un espacement de sous-porteuse des ressources du canal de liaison montante, ou des deux.

10. Le procédé selon la revendication 4, dans lequel la transmission du signal de liaison montante dans le symbole précédant les ressources planifiées du canal de liaison montante comprend :
la transmission d'au moins une seconde partie du message de liaison montante dans le symbole précédant les ressources planifiées du canal de liaison montante.

11. Le procédé selon la revendication 10, comprenant en outre :
la détermination d'une taille de bloc de transport pour une transmission d'au moins la seconde partie du message de liaison montante dans le symbole précédant les ressources planifiées du canal de liaison montante, dans lequel le signal de liaison montante est transmis conformément à la taille de bloc de transport.

12. Le procédé selon la revendication 10, comprenant en outre :
le décalage, d'un symbole, d'un emplacement de départ pour la transmission d'au moins la seconde partie du message de liaison montante sur les ressources du canal de liaison montante, dans lequel au moins la seconde partie du message de liaison montante est transmise conformément à l'emplacement de départ ; dans lequel au moins la seconde partie du message de liaison montante est transmise avec une taille de bloc de transport basée sur une transmission du message de liaison montante sur les ressources planifiées du canal de liaison montante.

13. Le procédé selon la revendication 1, dans lequel la réalisation de la procédure d'écoute avant d'émettre comprend :
la réalisation de la procédure d'écoute avant d'émettre dans la bande de spectre radiofréquence partagé durant au moins une partie des une ou plusieurs périodes de symbole de l'intervalle ; comprenant en outre :
la transmission d'une extension de préfixe cyclique dans au moins une seconde partie des une ou plusieurs périodes de symbole de l'intervalle, dans lequel une durée de l'extension de préfixe cyclique est basée au moins en partie sur une combinaison de la durée de la procédure d'écoute avant d'émettre et de la valeur d'avance temporelle qui est transmise à une station de base.

14. Un appareil de communication sans fil au niveau d'un équipement utilisateur, UE, comprenant :
un moyen pour déterminer de transmettre un message de liaison montante sur des ressources d'un canal de liaison montante dans une bande de spectre radiofréquence partagé ;
un moyen pour identifier une ou plusieurs périodes de symbole d'un intervalle entre des ressources d'un canal de liaison descendante et les ressources du canal de liaison montante, une durée d'une procédure d'écoute avant d'émettre, associée à la transmission du message de liaison montante, et une valeur d'avance temporelle pour l'UE ;
un moyen pour réaliser la procédure d'écoute avant d'émettre durant au moins une partie des ressources du canal de liaison montante ou au moins une partie des ressources du canal de liaison descendante, sur la base au moins en partie d'une combinaison de la durée de la procédure d'écoute avant d'émettre et de la valeur d'avance temporelle qui dépasse les une ou plusieurs périodes de symbole de l'intervalle ; et
un moyen pour transmettre le message de liaison montante sur la base au moins en partie d'un résultat de la procédure d'écoute avant d'émettre.

15. Un programme de calculateur comprenant des instructions qui, quand les instructions sont exécutées sur un processeur d'un appareil pour la communication sans fil au niveau d'un équipement utilisateur, UE, amènent ledit appareil à réaliser le procédé selon les revendications 1 à 13.
